(19) Europäisches Patentamt
European Patent Office
Office européen des brevets

(11) EP 2 158 673 B1

(12) EUROPÄISCHE PATENTSCHRIFT

(45) Veröffentlichungstag und Bekanntmachung des Hinweises auf die Patenterteilung:
27.10.2010 Patentblatt 2010/43

(51) Int Cl.:
H02P 6/00 (2006.01)   H02P 6/18 (2006.01)
H02P 6/08 (2006.01)   H02P 6/14 (2006.01)

(21) Anmeldenummer: 07725725.1

(22) Anmeldetag: 01.06.2007

(86) Internationale Anmeldenummer:
PCT/EP2007/004844

(87) Internationale Veröffentlichungsnummer:
WO 2008/148401 (11.12.2008 Gazette 2008/50)

(54) **VERFAHREN ZUM BETRIEB EINES EINSTRÄNGIGEN ELEKTRONISCH KOMMUTIERTEN MOTORS AN EINER GLEICHSPANNUNGSQUELLE, UND MOTOR ZUR DURCHFÜHRUNG EINES SOLCHEN VERFAHRENS**

METHOD FOR THE OPERATION OF A SINGLE-PHASE ELECTRONICALLY COMMUTATED MOTOR ON A DIRECT CURRENT SOURCE, AND MOTOR FOR PERFORMING SUCH A METHOD

PROCÉDÉ D'EXPLOITATION D'UN MOTEUR À COMMUTATION ÉLECTRONIQUE MONOPHASÉ SUR UNE SOURCE DE TENSION CONTINUE ET MOTEUR POUR METTRE UN TEL PROCÉDÉ EN OEUVRE

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**03.03.2010 Patentblatt 2010/09**

(73) Patentinhaber: **Ebm-Papst St. Georgen GmbH & CO. KG**
**78112 St. Georgen (DE)**

(72) Erfinder:
• **WEISSBACH, Henry**
**79777 Ühlingen-Birkendorf (DE)**

• **KUNER, Arnold**
**78112 St. Georgen (DE)**
• **LOEFFLER, Jens**
**78112 St. Georgen-Brigach (DE)**

(74) Vertreter: **Raible, Tobias**
**Raible & Raible**
**Schoderstrasse 10**
**70192 Stuttgart (DE)**

(56) Entgegenhaltungen:
**EP-A- 1 346 462     US-A- 4 376 261**
**US-A- 5 696 430     US-A- 6 049 184**
**US-A1- 2004 135 529**

**Beschreibung**

Die Erfindung betrifft einen Elektromotor, und ein Verfahren zum Betrieb eines solchen.

Es gibt verschiedene Bauarten von elektronisch kommutierten Motoren. Ein bekanntes Klassifikationssystem geht aus von der Zahl der Stromimpulse, welche der Statorwicklung eines solchen Motors pro Rotordrehung von 360° el. zugeführt werden. Man kann deshalb unterscheiden in einpulsige Motoren, bei denen der Statorwicklung während einer Rotordrehung von 360° el. nur ein einziger antreibender Stromimpuls zugeführt wird, zweipulsige Motoren, bei denen während einer Rotordrehung von 360° el. zwei Statorstromimpulse zugeführt werden, die gewöhnlich einen zeitlichen Abstand voneinander haben, ferner dreipulsige Motoren, sechspulsige Motoren, und andere.

Ferner klassifiziert man solche Motoren nach der Zahl ihrer Statorwicklungsstränge, also einsträngige, zweisträngige, dreisträngige etc. Motoren.

Dieses Klassifikationssystem ist bekannt aus asr-digest für angewandte Antriebstechnik, Heft 1-2, 1977, Seiten 27 bis 30.

Zur vollständigen Definition einer Bauart muss man also die Zahl der Wicklungsstränge und die Pulszahl pro 360° el. angeben, z.B. ein einsträngiger, zweipulsiger Motor. In Anlehnung an die Terminologie von Motoren, die mit Wechselstrom oder Drehstrom betrieben werden, bezeichnet man die zweipulsigen Motoren auch als "einphasige" Motoren, wobei also ein einphasiger Motor entweder einen oder zwei Statorwicklungsstränge haben kann.

Ein einsträngiger Motor ist aus EP1346462 bekannt.

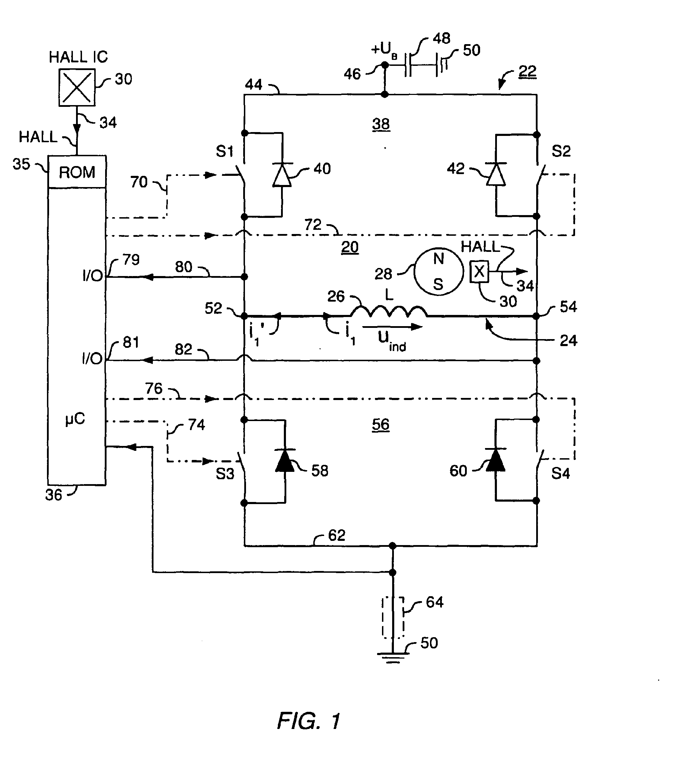

Ein einsträngiger Motor hat zur Steuerung des Stromes in seinem Statorwicklungsstrang gewöhnlich eine Brückenschaltung in Form einer sogenannten H-Brücke, in deren Querzweig (oder: "Diagonalen") der Wicklungsstrang (z.B. der Wicklungsstrang 26 in Fig. 1) angeordnet ist. Durch geeignete Steuerung der Brückenschaltung 22 wird der Strom im Wicklungsstrang so gesteuert, dass man Stromimpulse erhält, welche alternierend in der einen und dann in der entgegengesetzten Richtung durch diesen Wicklungsstrang 26 fließen. Zwischen zwei solchen Stromimpulsen liegt jeweils eine Umschaltung der Stromrichtung, die man im Elektromaschinenbau als "Kommutierung" bezeichnet. Der Motor hat meistens einen permanentmagnetischen Rotor, und die Stromimpulse im Wicklungsstrang 26 erzeugen Magnetfelder, welche diesen Rotor antreiben. Das auf diese Weise elektromagnetisch erzeugte Drehmoment hat Lücken, und diese werden durch ein Hilfsmoment überbrückt, z.B. ein mechanisches Hilfsmoment oder ein sog. Reluktanzmoment, vgl. z. B. die DE 23 46 380 C2. Es gibt praktisch unzählige Arten, ein solches Hilfsmoment zu erzeugen.

Solche Motoren werden gewöhnlich an einer Gleichspannungsquelle betrieben, z. B. an einer Batterie, einem Netzgerät, oder an einem Gleichrichter, der die Spannung eines Wechsel- oder Drehstromnetzes gleichrichtet und einem Gleichstrom-Zwischenkreis (dc link) zuführt, aus dem der Motor mit Gleichspannung versorgt wird. Meist ist an diesem Zwischenkreis ein Kondensator angeschlossen, den man als Zwischenkreis-Kondensator bezeichnet.

Wenn Strom durch einen Wicklungsstrang fließt, wird in diesem Energie in Form eines Magnetfelds gespeichert. Bezeichnet man die Induktivität eines solchen Stranges mit L und den Strom mit I, so berechnet sich diese Energie nach der Formel:

$$W = 0{,}5 * L * I^2 \qquad\qquad ...(1)$$

Soll zur Erzeugung eines umlaufenden Magnetfeldes die Stromrichtung in einem Wicklungsstrang umgekehrt, also "kommutiert", werden, so muss diese gespeicherte Energie zunächst abgebaut werden.

Wird die Energiezufuhr zu einem Strom führenden Wicklungsstrang abgeschaltet, so entsteht durch die Wirkung der sog. Selbstinduktion an diesem Wicklungsstrang ein Spannungsanstieg, der durch die gespeicherte magnetische Energie bewirkt wird. Dadurch können sehr hohe Spannungen entstehen. Folglich muss man Halbleiterschalter mit hoher Spannungsfestigkeit verwenden.

Eine gewisse Verbesserung kann man erreichen durch Verwendung eines Zwischenkreis-Kondensators, der dazu dient, die im-Wicklungsstrang gespeicherte magnetische Energie in Form von elektrischer Energie aufzunehmen und dadurch die Spannung zu begrenzen, welche am Gleichstrom-Zwischenkreis des Motors auftritt. Dieser Kondensator nimmt also im Betrieb Energie auf und gibt sie anschließend sofort wieder ab, d. h. auf den Zuleitungen dieses Kondensators fließt im Betrieb ständig ein Wechselstrom, den man auch als "Ripplestrom" bezeichnet.

Derartige Kondensatoren stellen, was die Materialkosten betrifft, eine preiswerte Lösung des geschilderten Problems dar, doch benötigt man relativ große Kondensatoren, gewöhnlich sog. Elektrolytkondensatoren, und deren Lebensdauer ist begrenzt und wird noch zusätzlich durch die starke Erwärmung reduziert, die durch den Ripplestrom verursacht wird. Die so herabgesetzte Lebensdauer des Kondensators begrenzt folglich die Lebensdauer des Motors, die - von den mechanischen Elementen des Motors her gesehen - wesentlich höher sein könnte. Auch ist in kleineren Motoren meist nicht genügend Platz für einen Elektrolytkondensator vorhanden, und solche Kondensatoren müssen teuer von Hand eingelötet werden, während die anderen Bauelemente automatisch gelötet werden können.

Eine weitere Möglichkeit zum Begrenzen der Spannungsspitzen, die beim Abschalten des Wicklungsstrangs auftreten, ist es, eine Zenerdiode zu verwenden, oder - bei Verwendung einer FET-Endstufe - die sog. Avalanche-Energie auszunutzen. Dabei wird die Energie, welche beim Abschalten im abzuschaltenden Wicklungsstrang gespeichert ist, in den genannten Halbleiterelementen in Wärme umgewandelt. Aus der Sicht der verwendeten Halbleiterelemente ist das Verlustleistung, und deshalb muss man entsprechend leistungsfähige Bauelemente verwenden.

Auch ist die in Wärme umgewandelte Energie "verloren" und kann nicht mehr zum Antrieb des Rotors genutzt werden, d. h. der Wirkungsgrad eines solchen Motors wird reduziert.

Es ist deshalb eine Aufgabe der Erfindung, einen neuen einsträngigen elektronisch kommutierten Motor sowie ein Verfahren zum Betrieb eines solchen Motors, bereit zu stellen. Nach einem ersten Aspekt der Erfindung wird diese Aufgabe gelöst durch einen Motor gemäß Patentanspruch 1. Bei der Erfindung wird also ein Verlauf des Kommutierungsvorgangs verwendet, bei dem - zumindest nach Erreichen der normalen Drehzahl - der Energieinhalt des verwendeten Wicklungsstrangs beim Umkehren der Stromrichtung praktisch gleich Null ist, so dass kein Ripplestrom entsteht. Das ermöglicht es, einen kleinen Zwischenkreis-Kondensator zu verwenden, der eine hohe Lebensdauer hat und im Motor nur wenig Platz beansprucht. In manchen Fällen kann ein solcher Kondensator auch ganz entfallen.

Bei diesem Verlauf des Kommutierungsvorgangs wird also die Energiezufuhr von der externen Gleichspannungsquelle zum Motor zu einem geeigneten Zeitpunkt abgeschaltet, und die Energie, die zum Abschaltzeitpunkt in dem Wicklungsstrang gespeichert ist, wird über einen Freilaufkreis in ein motorisches Drehmoment transformiert. Auf diese Weise wird die Energie, welche im Wicklungsstrang vor der Kommutierung gespeichert wurde, nicht in Wärme verwandelt oder in einem Kondensator zwischengespeichert, sondern zum größten Teil direkt zur Erzeugung eines Drehmoments verwendet. Dieser Vorgang, bei dem gespeicherte magnetische Energie direkt in mechanische Energie umgesetzt wird, stellt einen Teil des Kommutierungsvorgangs dar, sozusagen als Vorspiel zum eigentlichen Akt der Umkehr der Stromrichtung im Wicklungsstrang.

Dabei ist es besonders vorteilhaft, wenn der Freilaufkreis, durch den der abzuschaltende Strom fließt, erst dann unterbrochen wird, wenn die im Statorwicklungsstrang gespeicherte magnetische Energie abgebaut und somit dieser Strang annähernd oder völlig stromlos ist. So kann mit einfachsten Mitteln eine stromlose, verlustarme Kommutierung ermöglicht werden, und diese ermöglicht einen höheren Wirkungsgrad, aber auch die Verwendung kleinerer Bauelemente und höherer Leistungsdichten.

Eine andere Lösung der gestellten Aufgabe ergibt sich durch ein Verfahren gemäß Anspruch 15. Die Erfindung ermöglicht eine kompakte Bauweise eines solchen Motors und einen guten Wirkungsgrad sowie eine verbesserte Lebensdauer.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 ein Übersichts-Schaltbild zur Erläuterung der Grundzüge der Erfindung,

Fig. 2 ein detaillierteres Schaltbild analog Fig. 1,

Fig. 3 eine schematische Darstellung zur Erläuterung der Kommutierungsvorgänge,

Fig. 4 die Darstellung einer Routine zur Optimierung einer Zeitspanne $T_v$, die in Fig. 3 dargestellt ist,

Fig. 5 die Darstellung eines Stromes $i_1$, der während eines bestimmten Drehwinkelbereichs im Wicklungsstrang 26 fließt,

Fig. 6 eine Darstellung des zeitlichen Verlaufs des Stromes $i_1$,

Fig. 7 die Darstellung eines Kreisstromes i*, der während des Kommutierungsvorganges fließt,

Fig. 8 eine entsprechende Darstellung analog Fig. 6,

Fig. 9 die Darstellung eines Stromes $i_{1'}$, der nach einem Kommutierungsvorgang fließt,

Fig. 10 eine entsprechende Darstellung analog Fig. 6 und 8,

Fig. 11 die Darstellung eines Kreisstromes - i*, der im Anschluss an die Darstellung nach den Fig. 9 und 10 fließt,

Fig. 12 eine entsprechende Darstellung analog Fig. 6, 8 und 10,

Fig. 13     die Darstellung einer Variante, die als sensorloser Motor ausgebildet ist,

Fig. 14     eine schematische Darstellung der Spannungen im Betrieb eines Motors, und

Fig. 15     ein Flussdiagramm zur Erläuterung der Erfindung.

**Fig. 1** zeigt in stark schematisierter Darstellung den grundsätzlichen Aufbau eines zweipulsigen, einsträngigen elektronisch kommutierten Motors 20, dessen einziger Wicklungsstrang 26 an einer H-Brücke 22 betrieben wird, deren H-förmige Grundstruktur durch dickere Linien hervorgehoben ist, um das Verständnis zu erleichtern.

In einem Querzweig 24, den man auch als Diagonale der H-Brücke 22 bezeichnet, hat der Motor 20 in seinem Stator den Wicklungsstrang 26 mit der Induktivität L. Dieser arbeitet zusammen mit einem schematisch dargestellten permanentmagnetischen Rotor 28, der je nach Bauart die verschiedensten Formen haben kann, z.B. Innenrotor, Außenrotor, Flachrotor etc., und der verschiedene Polzahlen haben kann, z.B. zweipolig (wie dargestellt), vier-, sechs-, achtpolig etc.

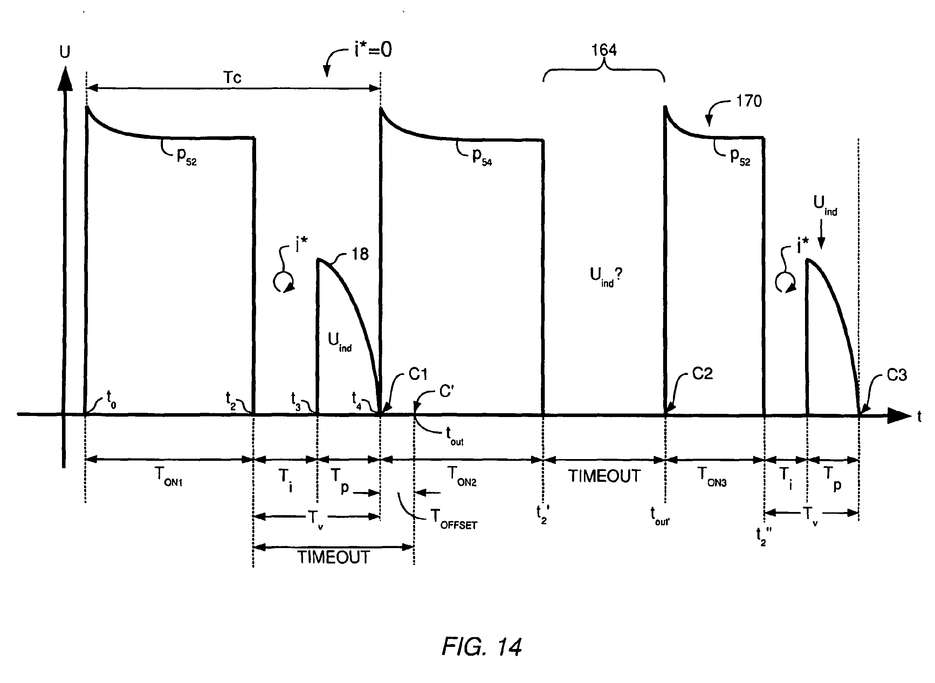

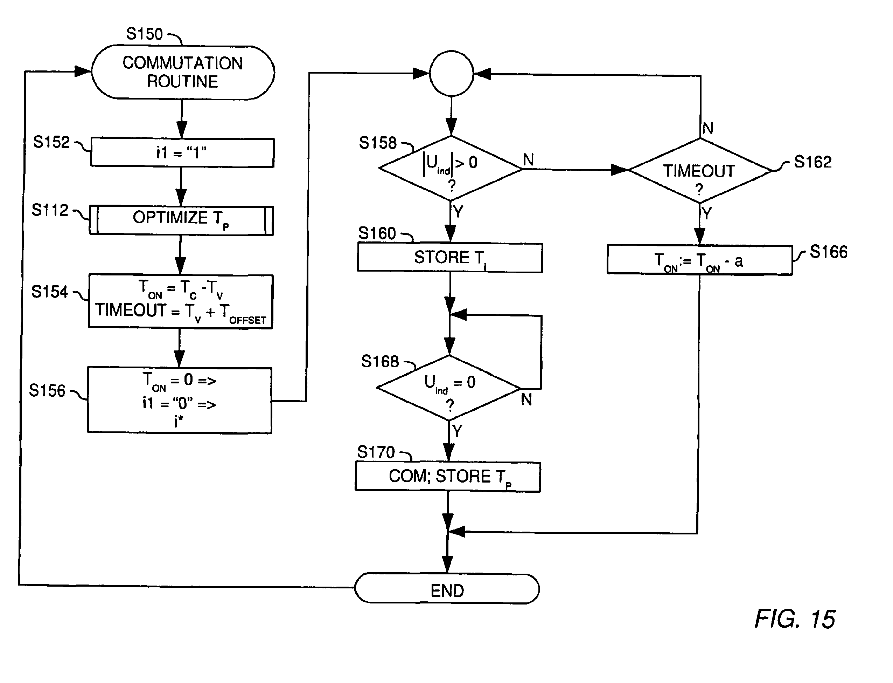

Ein Hall-IC 30, der in Fig. 1 doppelt dargestellt ist, wird vom Magnetfeld des Rotors 28 gesteuert. Das Ausgangssignal HALL des Hall-IC 30 wird über eine Leitung 34 einem Mikrocontroller ($\mu$C) 36 zugeführt und liefert diesem Informationen über die augenblickliche Stellung des Rotors 28. Nachfolgend wird bei Fig. 14 und Fig. 15 auch ein Ausführungsbeispiel ohne Sensor beschrieben.

Die H-Brücke 22 hat eine obere Brückenhälfte 38, bei der links ein Halbleiterschalter S1 und rechts ein Halbleiterschalter S2 vorgesehen ist. Zu S1 ist eine Freilaufdiode 40 und zu S2 ist eine Freilaufdiode 42 antiparallel geschaltet, deren Katoden über eine Verbindungsleitung 44 an den positiven Pol 46 einer Spannungsquelle $U_B$ angeschlossen sind. Zwischen dem Pol 46 und Masse 50 ist auch ein Kondensator 48 angeschlossen, den man als Zwischenkreis-Kondensator 48 bezeichnen kann und der dazu dient, einen Rückspeisestrom vom Motor 20 aufzunehmen, was nachfolgend näher erläutert wird. Es gelingt so mit geringem Aufwand, diesen Rückspeisestrom niedrig zu halten.

Die Anode der Diode 40 ist mit einem Knotenpunkt 52 verbunden, die der Diode 42 mit einem Knotenpunkt 54. Der Wicklungsstrang 26 ist zwischen den Knotenpunkten 52 und 54 angeordnet.

Die H-Brücke 22 hat auch eine untere Brückenhälfte 56, bei der links ein Halbleiterschalter S3 und rechts ein Halbleiterschalter S4 vorgesehen sind. Zu S3 ist eine Freilaufdiode 58 und zu S4 eine Freilaufdiode 60 antiparallel geschaltet. Die Katode der Diode 58 ist mit dem Knotenpunkt 52 verbunden, die der Diode 60 mit dem Knotenpunkt 54. Die Anoden der Dioden 58, 60 sind über eine Verbindungsleitung 62 mit Masse 50 verbunden. Ggf. kann in der Verbindung mit Masse 50 ein Strommessglied 64 vorgesehen sein, z.B. für die Messung des Motorstroms, um diesen bei Überstrom zu begrenzen. Meist ist das Messglied 64 ein niederohmiger Widerstand.

Die Halbleiterschalter S1 bis S4 werden über Steuerverbindungen 70, 72, 74, 76 vom $\mu$C 36 gesteuert. Hierzu braucht der $\mu$C 36 Informationen über die augenblickliche Rotorstellung, die er teilweise über das Signal HALL erhält. Diese Information ist aber noch nicht exakt genug, und deshalb wird einem I/O-Eingang 79 des $\mu$C 36 zusätzlich noch über eine Signalleitung 80 eine Information über das Potential am Knotenpunkt 52 zugeführt, und ebenso wird einem I/O-Eingang 81 des $\mu$C 36 über eine Signalleitung 82 eine Information über das Potential am Knotenpunkt 54 zugeführt. Mit Hilfe dieser zusätzlichen Informationen und ggf. ihrer logischen Verknüpfung ist eine wesentlich verbesserte Kommutierung möglich, bei der es gelingt, mit einem kleinen (oder gar keinem) Kondensator 48, also ohne einen Rückspeisestrom, auszukommen.

Man könnte deshalb Fig. 1 als Kombination aus einer Steuerung der Kommutierung mittels der Information von einem Rotorstellungssensor 30 und mittels der Information aus sogenannten sensorlosen Rotorstellungssignalen bezeichnen, also von Rotorstellungsinformationen, die aus der induzierten Spannung $u_{ind}$ am Wicklungsstrang 26 abgeleitet sind. (Die induzierte Spannung wird auch als Gegen-EMK oder Back-EMF bezeichnet.)

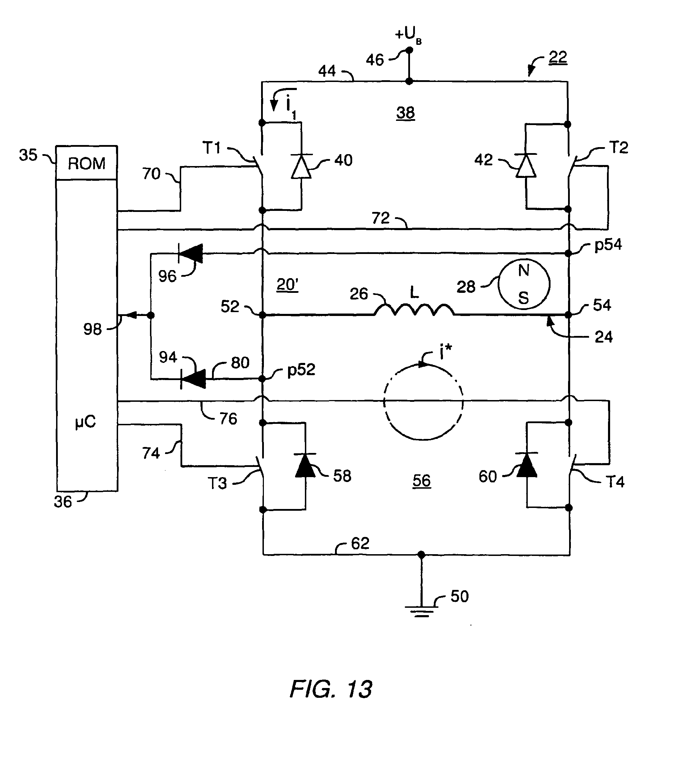

Wenn ein $\mu$C 36 nur einen einzigen I/O-Anschluss 98 hat, kann die in **Fig. 13** dargestellte Variante verwendet werden. Hierbei sind an den I/O-Anschluss 98 die Katoden von zwei Dioden 94, 96 angeschlossen. Die Anode der Diode 94 ist an den Knotenpunkt 52 angeschlossen, und die Anode der Diode 96 ist an den Knotenpunkt 54 angeschlossen. Die Dioden 94, 96 wirken wie eine ODER-Schaltung, so dass dem Anschluss 98 entweder das Potenzial $p_{54}$ zugeführt wird, wenn dieses größer ist, oder das Potenzial $p_{52}$, wenn letzteres größer ist. Die Dioden 94, 96 entkoppeln hierbei die Knotenpunkte 52, 54 voneinander.

**Arbeitsweise**

Im Betrieb werden - je nach der Drehstellung des Rotors 28 - z.B. als erstes die beiden Halbleiterschalter S1 und S4 leitend gemacht, so dass ein Stromimpuls $i_1$ vom Anschluss 46 über S1, den Knotenpunkt 52, den Wicklungsstrang 26, den Knotenpunkt 54 und S4 nach Masse 50 fließt.

An diesen Stromimpuls $i_1$ schließt sich ein Kommutierungsvorgang an, an dessen Anfang die Energiezufuhr zum Motor 20 unterbrochen wird, indem - bei diesem Beispiel - S1 nichtleitend gemacht wird. Dieser Vorgang wird nachfolgend ausführlich beschrieben. Wenn am Ende des Kommutierungsvorgangs im Wicklungsstrang 26 kein Strom $i_1$ mehr fließt, wird auch S4 nichtleitend gemacht, und die Halbleiterschalter S2 und S3 werden leitend gemacht, so dass jetzt ein Stromimpuls $i_1$' vom Anschluss 46 über den Halbleiterschalter S2, den Knotenpunkt 54, den Strang 26, den Knotenpunkt 52 und den Schalter S3 nach Masse 50 fließt.

Die vorliegende Erfindung befasst sich mit der Verbesserung des Kommutierungsvorgangs, damit man mit einem Kondensator 48 von geringer Größe auskommt, d.h. dass ein eingangs genannter Ripplestrom, der im technischen Sprachgebrauch auch als Rückspeisestrom bezeichnet wird, verhindert wird oder nur geringe thermische Verluste verursacht. Optimal ist es, wenn der Kommutierungsvorgang so verbessert wird, dass der Kondensator 48 ganz entfallen kann, weil der Rückspeisestrom sehr klein oder sogar zu Null wird.

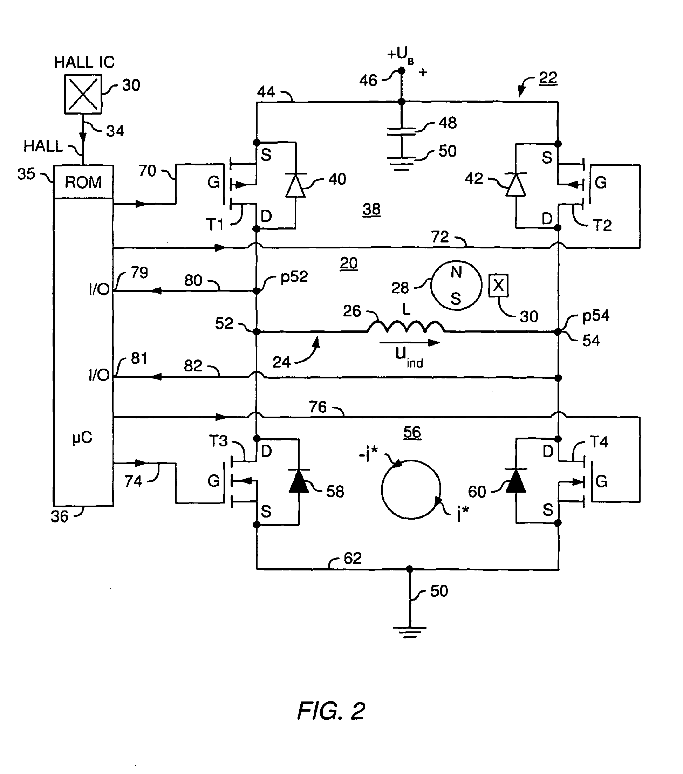

**Fig. 2** zeigt ein Beispiel für die Realisierung der H-Brücke 22 mit MOSFETs. Gleiche oder gleich wirkende Teile wie in Fig. 1 haben dieselben Bezugszeichen wie dort und werden gewöhnlich nicht nochmals beschrieben.

Statt des Halbleiterschalters S1 der Fig. 1 ist hier ein p-Kanal-MOSFET T1 vorgesehen, dessen Source S mit dem Anschluss 46 verbunden ist und dessen Gate G über die Leitung 70 vom µC 36 gesteuert wird. Antiparallel zum MOSFET T1 liegt die Freilaufdiode 40. In vielen Fällen ist eine solche Freilaufdiode bereits im MOSFET vorhanden als sogenannte "parasitäre" Freilaufdiode. Falls nicht, kann sie als separates Bauelement ausgeführt werden.

Ebenso ist statt des Halbleiters S2 der Fig. 1 ein p-Kanal-MOSFET T2 vorhanden, zu dem die Freilaufdiode 42 antiparallel geschaltet ist. Der Transistor T2 wird über die Leitung 72 vom µC 36 gesteuert.

Statt des Halbleiterschalters S3 der Fig. 1 ist in Fig. 2 ein n-Kanal-MOSFET T3 vorgesehen, zu dem die Freilaufdiode 58 antiparallel geschaltet ist. Seine Source S ist mit Masse 50 verbunden, und sein Drain D ist, ebenso wie derjenige des Transistors T1, mit dem Knotenpunkt 52 verbunden. Er wird über eine Leitung 74 vom µC gesteuert.

Ebenso ist statt des Halbleiterschalters S4 der Fig. 1 ein n-Kanal-MOSFET T4 vorgesehen, zu dem die Freilaufdiode 60 antiparallel geschaltet ist. Sein Drain D ist ebenso wie der Drain D des Halbleiterschalters T2 mit dem Knotenpunkt 54 verbunden. Der MOSFET T4 wird über die Steuerleitung 76 vom µC 36 gesteuert.

Das Potenzial $p_{52}$ am Knotenpunkt 52 wird über die Leitung 80 dem Messeingang 79 des µC 36 zugeführt, und analog wird das Potenzial $p_{54}$ am Knotenpunkt 54 über die Leitung 82 dem Messeingang 81 zugeführt.

Zur Erläuterung der Wirkungsweise von Fig. 2 wird auf die nachfolgenden Figuren Bezug genommen.

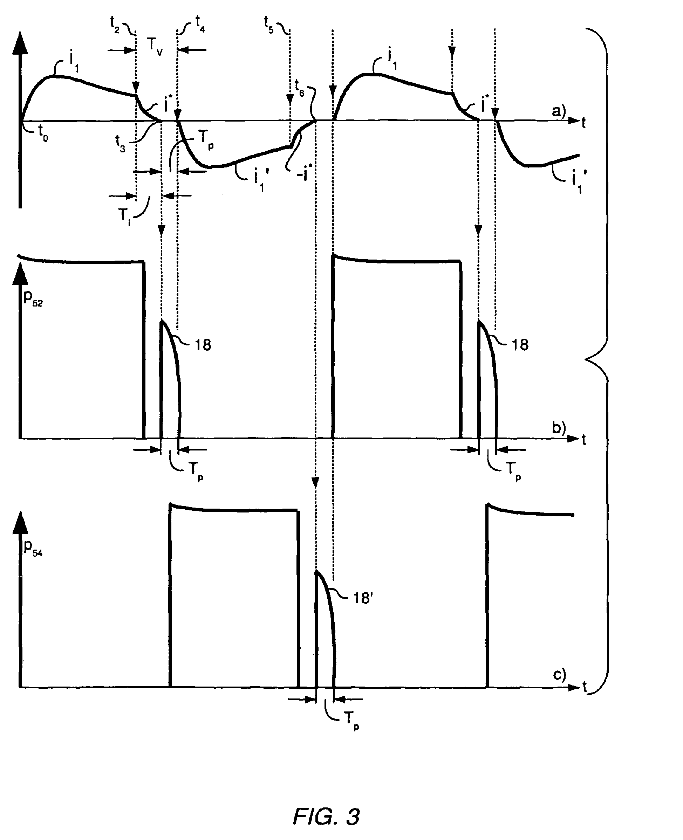

**Fig. 3** zeigt in der Zeile a) den Strom im Strang 26 der Fig. 2, in der Zeile b) das dabei entstehende Potential $p_{52}$ am Knotenpunkt 52, welches dem Potential an den Drains der Transistoren T1 und T3 entspricht, und Zeile c) zeigt das dabei entstehende Potential $p_{54}$ am Knotenpunkt 54, also an den Drains der beiden Transistoren T2, T4.

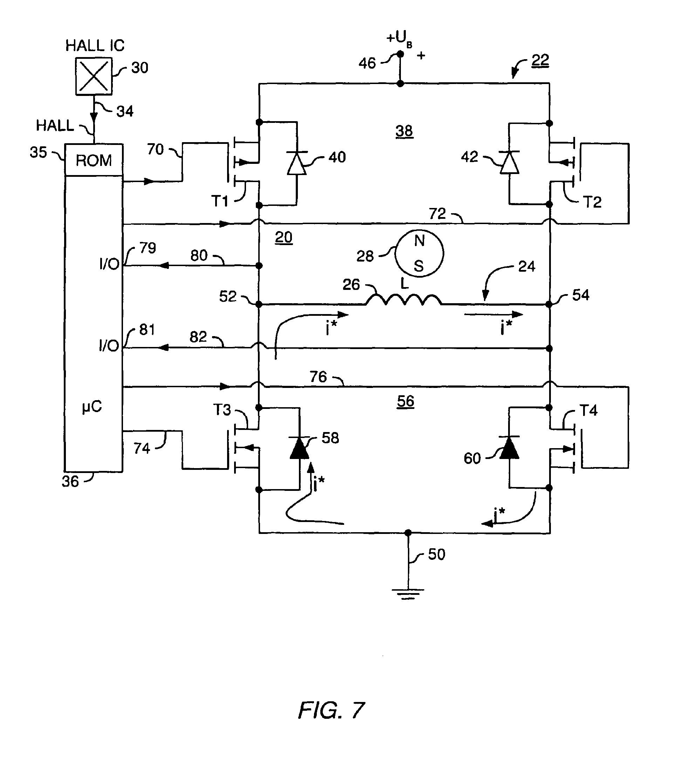

Fig. 3a zeigt ganz links den Strom $i_1$, der fließt, wenn die beiden Transistoren T1 und T4 leitend sind. Der Strom $i_1$ beginnt an einem Zeitpunkt $t_0$. An einem Zeitpunkt $t_2$ wird der Transistor T1 durch den µC 36 gesperrt, so dass die Energiezufuhr vom Gleichstromnetz $U_B$ zum Motor 20 unterbrochen wird und in der unteren Brückenhälfte 56 der Fig. 2 ein Kreisstrom i* im Uhrzeigersinn fließt, vgl. Fig. 7, der nach einer Zeitspanne $T_i$ (Fig. 3) zu einem Zeitpunkt $t_3$ zu Null wird, weil die im Motor magnetisch gespeicherte Energie vollständig in Rotationsenergie des Rotors 28 umgewandelt worden ist.

Während des Zeitraums $T_i$, der meist nur wenige Mikrosekunden dauert, haben die Potentiale $p_{52}$ und $p_{54}$ als Folge des Kreisstroms i* den Wert Null, wie das in Fig. 3b) und Fig. 3c) dargestellt ist, d.h. die Spannung $u_{ind}$ (Fig. 1 und 2) kann während $T_i$ nicht gemessen werden.

Ist aber der Kreisstrom i* zum Zeitpunkt $t_3$ zu Null geworden, so kann man am Knotenpunkt 52 ein Potential $p_{52}$ messen, das der induzierten Spannung entspricht und das folglich anzeigt, dass der Wicklungsstrang 26 stromlos geworden ist. Hierbei entsteht am Knotenpunkt 52 ein Impuls 18 mit der Zeitdauer $T_p$ (Fig. 3b). Ab dem Zeitpunkt $t_3$ kann der Transistor T4 leistungslos gesperrt werden, und ebenso kann der Transistor T3 leistungslos eingeschaltet werden.

Dieser stromlose Zustand dauert in Fig. 3a bis zum Zeitpunkt $t_4$, d.h. es gilt

$$T_p = t_4 - t_3 \qquad\qquad \dots (2).$$

Die Zeitdauer $T_p$ stellt eine Pufferzeit dar, die eine Mindestdauer $T_{pmin}$ nicht unterschreiten sollte, andererseits aber auch nicht zu groß werden darf, da sonst die Leistung des Motors 20 zu klein wird, weil ja während der Zeitdauer $T_p$ dem Motor 20 keine Energie von außen zugeführt wird.

Ab dem Zeitpunkt $t_4$ sind in Fig. 2 beide Transistoren T2 und T3 eingeschaltet, so dass in Fig. 2 ein Strom $i_1$' vom Knotenpunkt 54 zum Knotenpunkt 52 fließt. An einem Zeitpunkt $t_5$ wird dann der Transistor T2 gesperrt, während der Transistor T3 leitend bleibt, so dass ein Kreisstrom -i* (Fig. 2 und 3) fließt, der zu einem Zeitpunkt t6 zu Null wird, so dass ab $t_6$ am Knotenpunkt 54 das Potential $p_{54}$ gemessen werden kann, das während der Dauer des Kreisstromes -i* den Wert Null hatte.

Das Potential $p_{54}$ entspricht der Spannung, die im Wicklungsstrang 26 durch den rotierenden Rotor 28 induziert wird, und ist hier schematisch als Impuls 18 (bzw. als Impuls 18') angedeutet. Länge und Form der Impulse 18, 18' sind abhängig von der Länge des stromlosen Zeitraums $T_p$ zwischen $t_3$ und $t_4$. In der Praxis ist der Zeitraum $T_p$ sehr kurz, so dass man am Knotenpunkt 52 nur einen kurzen Impuls 18 erhält, welcher eine Bestätigung dafür darstellt, dass jetzt kommutiert werden kann. Dieser Impuls ist auch ein sensorloses Signal für die Drehstellung des Rotors 26.

Der Abstand $T_v$ zwischen dem Zeitpunkt $t_2$, an dem die Energiezufuhr aus der Gleichspannungsquelle $U_B$ zum Strang 26 unterbrochen wurde, bis zum Zeitpunkt $t_4$, an dem diese Energiezufuhr wieder eingeschaltet wird, sollte naturgemäß so kurz wie möglich sein, da dann die Motorleistung am höchsten ist. Diese Zeitdauer $T_v$ wird durch eine Programmroutine im Mikrocontroller 38 optimiert.

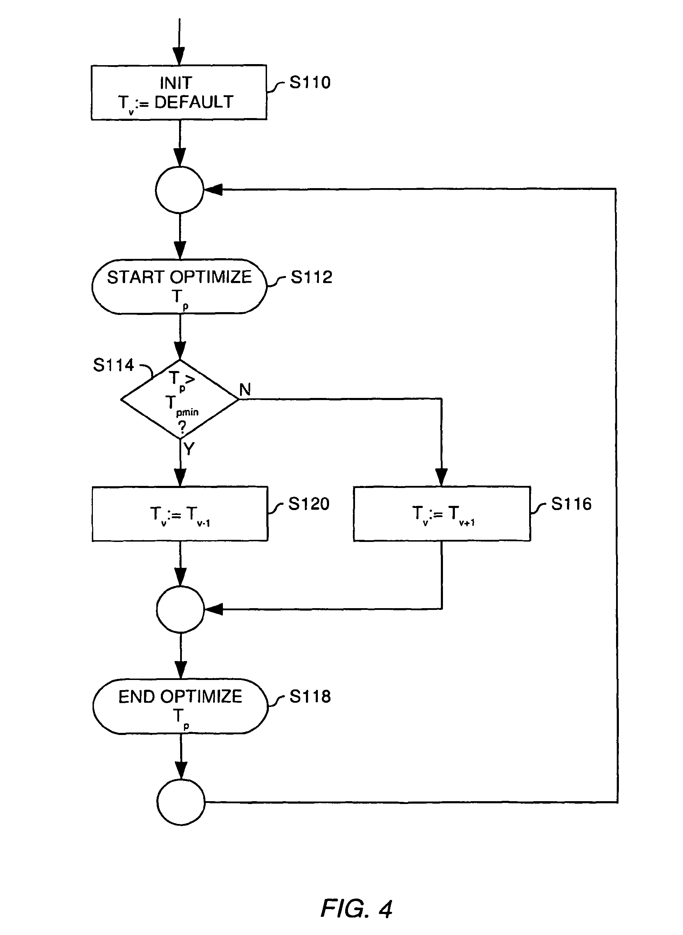

**Fig. 4** zeigt eine Routine zur Optimierung der Zeitdauer $T_p$. $T_p$ sollte so groß sein, dass am Ende des Stromkreisens, also wenn der Kreisstrom i* oder -i* den Wert Null erreicht hat, eine steigende Flanke 18 oder 18' (Fig. 3) gemessen werden kann, d.h. der Wert $T_p$ sollte nach unten durch einen Minimalwert $T_{pmin}$ begrenzt werden, so dass Asymmetrien, z.B. in der Elektronik oder in der Motorgeometrie, die Erkennung der Flanken 18 bzw. 18' nicht gefährden (Fig. 3).

Wie man aus Fig. 3 gut erkennt, wird die Zeitdauer $T_v = t_4 - t_2$ umso größer, je größer $T_p$ wird.

Bei der Initialisierung des Motors 20 wird also in S110 $T_v$ auf einen Defaultwert gesetzt, der im ROM 35 des $\mu$C 36 gespeichert ist, z.B. in einer Wertetabelle.

Die Optimierungsroutine beginnt in S112.

In S114 wird geprüft, ob $T_p$ noch oberhalb einer Mindestpufferzeit $T_{pmin}$ liegt. Falls ja, kann der Wert $T_v$ in S120 dekrementiert werden, wodurch auch $T_p$ reduziert wird. Anschließend wird auf diesem Programmpfad die Optimierungsroutine (S118) verlassen.

Wird in S114 die Abfrage mit Nein beantwortet, d.h. $T_p$ entspricht $T_{pmin}$ oder ist kleiner, so kommen die Signale 18 bzw. 18' zu spät. Das bedeutet, dass man sich einem kritischen Bereich nähert, in welchem der Wicklungsstrom bis zum Nulldurchgang der induzierten Spannung nicht mehr vollständig abgebaut werden kann. Folglich wird in S116 die Zeitdauer $T_v$ inkrementiert, um die Mindestpufferzeit $T_{pmin}$ wieder zu überschreiten. Anschließend wird auch auf diesem Programmpfad die Optimierungsroutine (S118) wieder verlassen.

Wie Fig. 4 zeigt, wird die Routine gemäß Fig. 4 ständig durchlaufen, um die Werte für $T_p$ und $T_v$ ständig in einem optimalen Bereich zu halten, in dem der Motor 20 seine optimale Leistung erzeugt, ohne dabei einen Rückspeisestrom in den Kondensator 48 zu erzeugen. Anders gesagt wird die Zeit $T_i$ genügend groß, damit der Kreisstrom i* oder -i* vor der Kommutierung auf Null fallen kann und eine stromlose Kommutierung möglich ist.

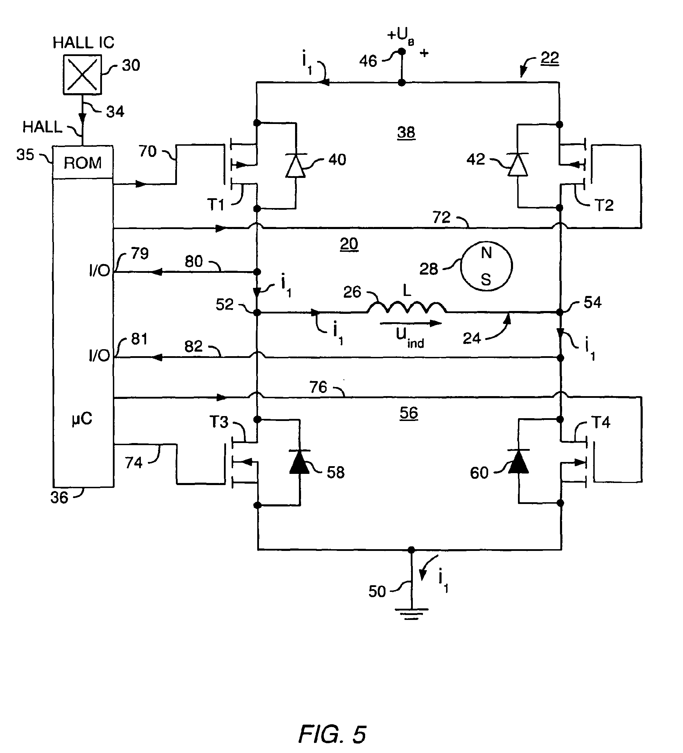

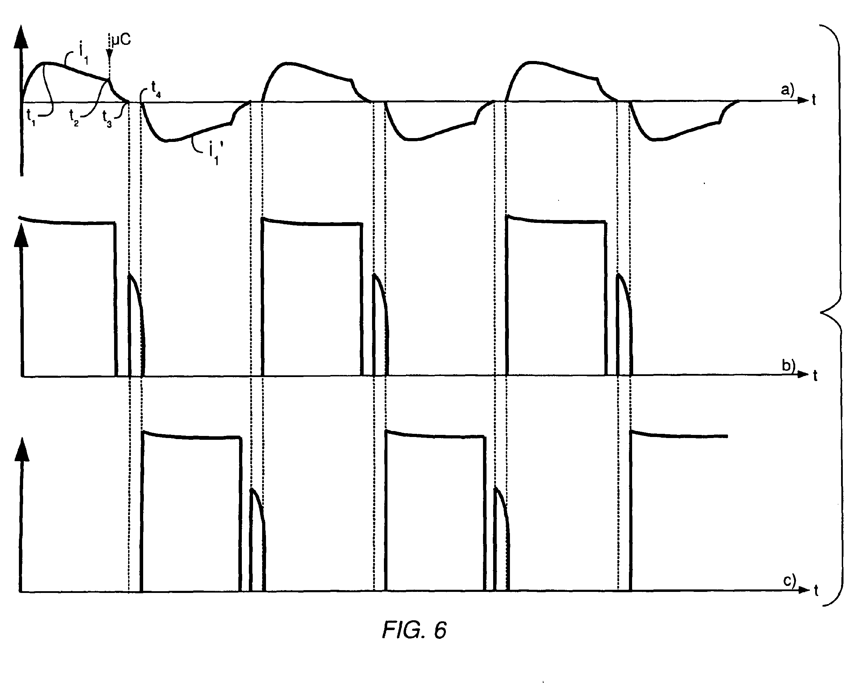

**Fig. 5** zeigt die Verhältnisse im Motor 20 zum Zeitpunkt $t_1$ der **Fig. 6.** Es fließt der Strom $i_1$ vom Anschluss 46 über den Transistor T1, den Knotenpunkt 52, den Wicklungsstrang 26, den Knotenpunkt 54 und den Transistor T4 nach Masse 50. Dieser Strom $i_1$ hat eine Form, die von der Form der induzierten Spannung $u_{ind}$ am Wicklungsstrang 26 abhängt. Die Transistoren T2 und T3 sind zum Zeitpunkt $t_1$ nicht leitend.

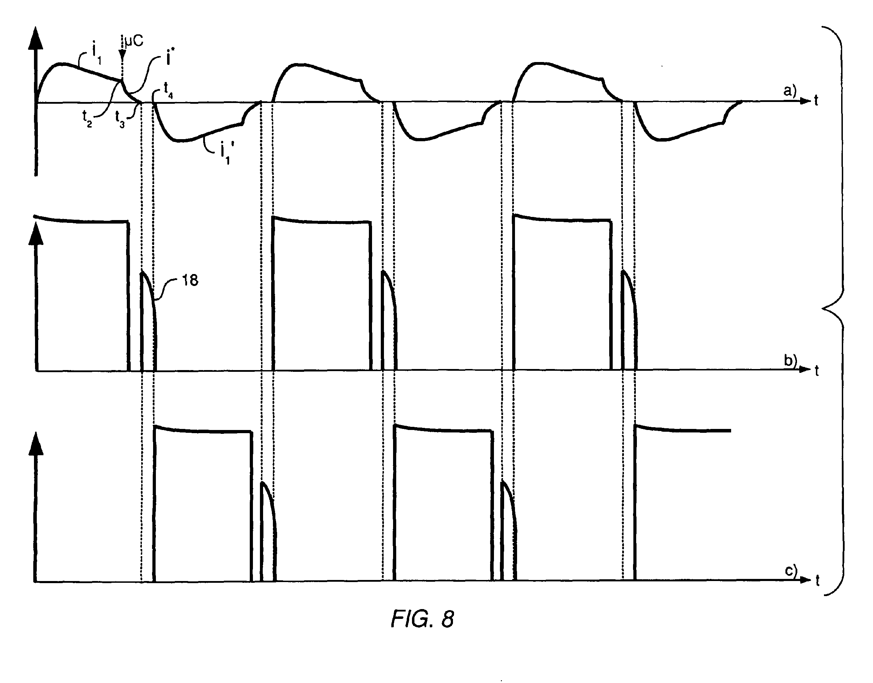

**Fig. 7** zeigt den Zustand zum Zeitpunkt $t_2$ **(Fig. 8),** an dem der Transistor T1 vom $\mu$C 36 über die Leitung 70 einen Ausschaltbefehl erhält. Da auch der Transistor T2 gesperrt ist, kann vom Gleichspannungsnetz $U_B$ keine Energie mehr zum Wicklungsstrang 26 gelangen. Jedoch lässt die im Wicklungsstrang 26 gespeicherte magnetische Energie einen Kreisstrom i* fließen, der über den Knotenpunkt 54, den - weiterhin leitenden - Transistor T4, die Querverbindung 62, die Freilaufdiode 58 des gesperrten Transistors T3, den Knotenpunkt 52 und den Wicklungsstrang 26, zurück zum Knotenpunkt 54 fließt. Durch diesen Kreisstrom i* wird die im magnetischen Kreis des Motors 20 gespeicherte Energie in mechanische Energie umgewandelt, welche den Rotor 28 antreibt.

Der Strom i* kreist in der beschriebenen Weise im Kurzschluss und treibt dadurch den Rotor 28 weiterhin an. Wie Fig. 8b zeigt, hält dieser Strom i* im Zeitraum zwischen $t_2$ und $t_3$ das Potenzial p52 am Knotenpunkt 52 niedrig, da letzterer über die leitende Diode 58 mit Masse 50 verbunden ist. Dieses niedrige Potenzial wird über die Leitung 72 dem Eingang 79 des $\mu$C 36 zugeführt, so dass dieser die Information erhält, dass noch ein - abklingender - Kreisstrom i* fließt. Dieser Kreisstrom fällt mangels Energiezufuhr rasch auf Null.

Der Zustand i* = 0 wird zum Zeitpunkt $t_3$ erreicht, und folglich kann ab diesem Zeitpunkt die im Wicklungsstrang 26 induzierte Spannung am Knotenpunkt 52 gemessen werden, wird über die Leitung 72 dem Eingang 79 des $\mu$C 36 zugeführt, und zeigt diesem an, dass der Wicklungsstrang 26 nunmehr stromlos geworden ist und eine leistungslose Kommutierung möglich ist.

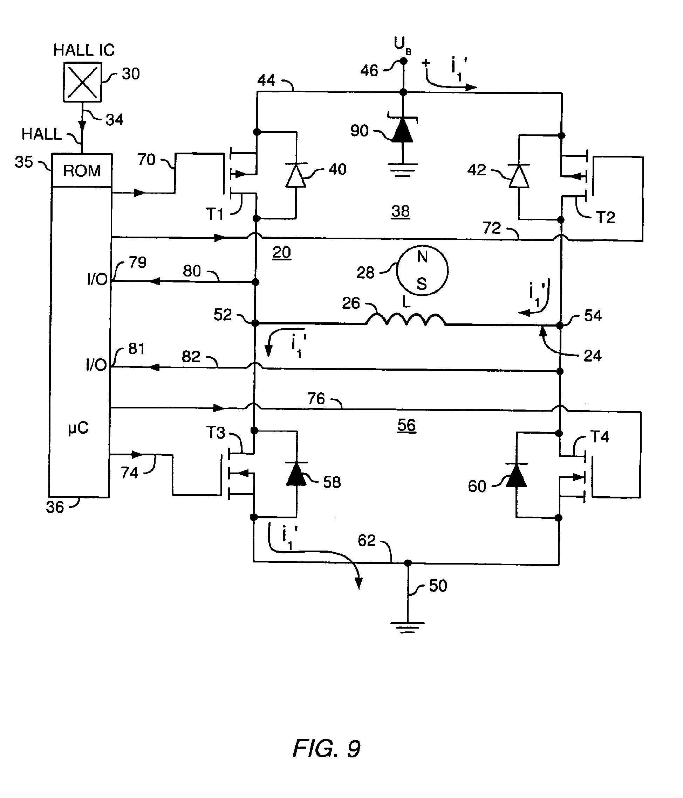

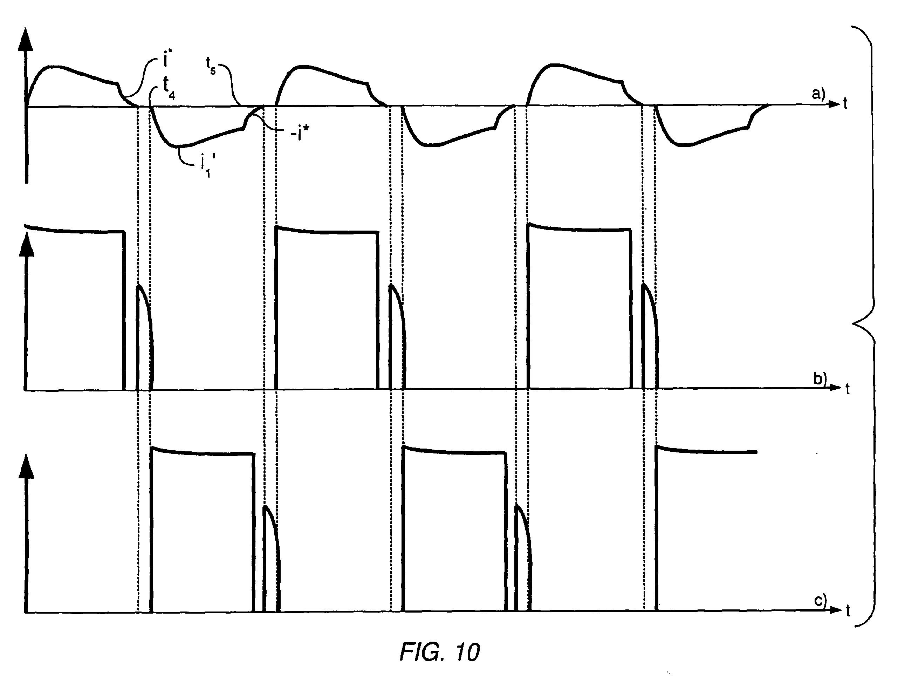

Deshalb wird zum Zeitpunkt $t_4$, der naturgemäß möglichst dicht beim Zeitpunkt $t_3$ liegen sollte, erneut kommutiert, wodurch sich das Bild nach **Fig. 9** und **Fig. 10** ergibt.

Zum Zeitpunkt $t_4$ ist der Transistor T1 bereits gesperrt, und der Transistor T4 wird durch ein entsprechendes Signal vom $\mu$C 36 ebenfalls gesperrt. Die Transistoren T2 und T3 werden vom $\mu$C 36 leitend gesteuert, so dass nun ein Strom $i_1'$ vom Anschluss 46 über den Transistor T2 den Wicklungsstrang 26, und den Transistor T3 nach Masse 50 fließt. Dieser Strom $i_{1*}$ hat also im Wicklungsstrang 26 die entgegengesetzte Richtung wie der Strom $i_1$ der Fig. 3 und ist deshalb in Fig. 10a) als negativer Strom dargestellt.

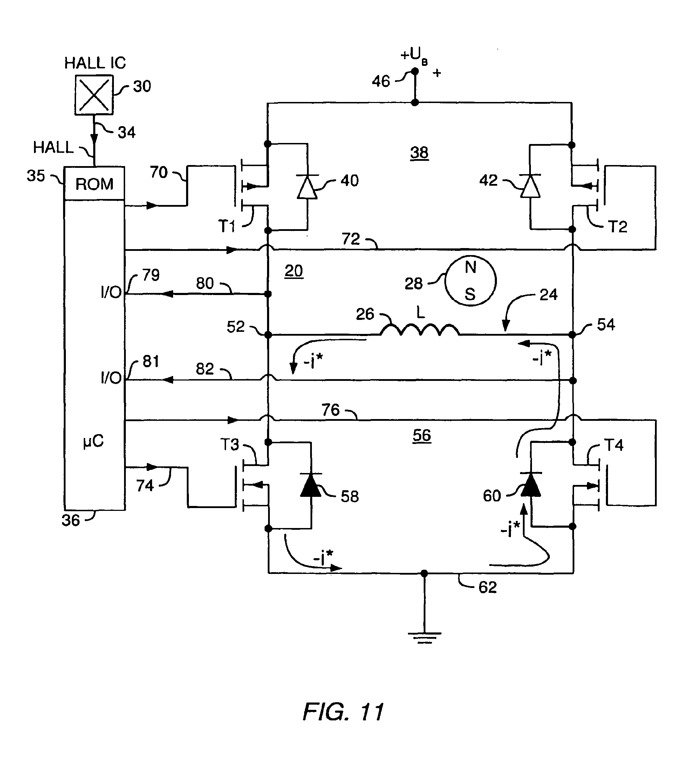

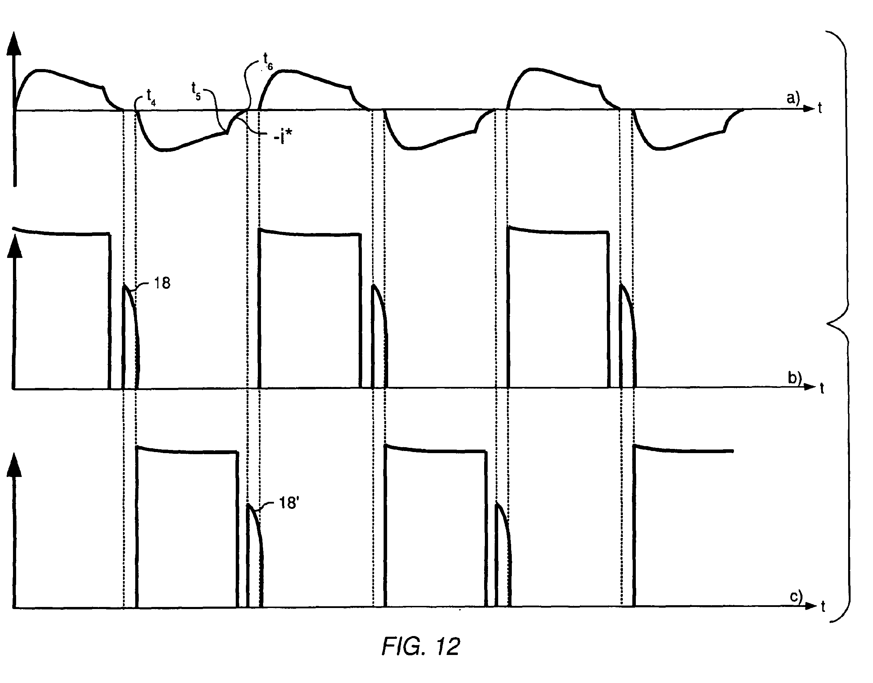

Zu einem Zeitpunkt $t_5$ (Fig. 10a)) wird der Transistor T2 nichtleitend gesteuert, so dass die Energiezufuhr aus dem Gleichspannungsnetz $U_B$ unterbrochen wird. Deshalb fließt nun, wie in **Fig. 11** und **Fig. 12** dargestellt, ein Kreisstrom -i* durch den Wicklungsstrang 26. Dieser Strom fließt vom Knotenpunkt 52 über den weiterhin leitenden Transistor T3, die Querverbindung 62, die Freilaufdiode 60, den Knotenpunkt 54, den Wicklungsstrang 26 und zurück zum Knotenpunkt 52. Hierdurch wird die Energie, die im magnetischen Kreis des Motors 20 zum Zeitpunkt $t_2$ gespeichert war, in mechanische Energie des Motors 20 umgewandelt, so dass kein Rückspeisestrom in der Verbindung zum Kondensator 48 fließt.

Zum Zeitpunkt $t_6$ erreicht der Kreisstrom -i* den Wert Null, und folglich erhält man am Knotenpunkt 54 ein Signal 18', das vom Wert Null verschieden ist, und dieses Signal 18' wird über die Leitung 80 dem Messeingang 69 des $\mu$C 36 zugeführt und zeigt diesem an, dass kommutiert werden kann.

Der genaue Zeitpunkt der Kommutierung wird jeweils vom $\mu$C 36 aufgrund der Information vom Hall-IC 30 berechnet oder direkt vom Signal HALL gesteuert und bewirkt, dass der Transistor T4 gesperrt wird und die Transistoren T2, T3 leitend gesteuert werden, wodurch sich die Vorgänge wiederholen, die oben bei Fig. 5, 6, 7 und 8 ausführlich beschrieben wurden.

Beim Anlauf oder einem Lastwechsel des Motors 20, z. B. bei einem Lüfter durch einen Windstoß, kann es vorkommen, dass der im Augenblick leitende Transistor T1 oder T2 der oberen Brückenhälfte 38 zu spät nichtleitend gemacht wird und dadurch zum Kommutierungszeitpunkt (z. B. $t_4$ in Fig. 3) noch ein Kreisstrom i* im Wicklungsstrang 26 fließt. In diesem Fall ist eine stromlose Kommutierung nicht möglich und es müssen Schutzmaßnahmen ergriffen werden.

Die eine Möglichkeit ist die Verwendung eines Zwischenkreiskondensators 48, der in diesem Fall die restliche Energie aus dem Wicklungsstrang 26 aufnimmt und dadurch die Spannung am Anschluss 46 begrenzt. Das ist in den Fig. 1 und 2 dargestellt. Die zweite Möglichkeit ist die Begrenzung der Spannung $U_B$ durch eine Z-Diode 90. Dies ist in Fig. 9 dargestellt. - Die beiden Möglichkeiten können auch kombiniert werden.

Beim Anlauf eines Motors in einem Lüfter ist durch den Stillstand des Rotors 28 zunächst keine induzierte Spannung $u_{ind}$ am Wicklungsstrang 26 vorhanden. Dies hat zur Folge, dass der Strom im Wicklungsstrang 26 nur durch den Widerstand dieses Wicklungsstrangs begrenzt wird. Aus diesem Grunde kann es zweckmäßig sein, den Strom im Wicklungsstrang 26 zu begrenzen. Hierzu dient der Messwiderstand 64, der in Fig. 1 dargestellt ist. Wenn der Strom in diesem Widerstand 64 einen vorgegebenen Wert überschreitet, wird der Strom im Wicklungsstrang 26 unterbrochen. Zu diesem Zweck können die oberen oder unteren Halbleiterschalter der H-Brücke 22 verwendet werden. Auch in diesem Fall kann die magnetische Energie, welche im Wicklungsstrang 26 gespeichert ist, in genau der gleichen Weise durch Erzeugen eines Kreisstroms i* in mechanische Energie umgewandelt werden.

Häufig sind Motoren mit Schaltungen versehen, welche erkennen, wenn der Motor 20 blockiert ist. Diese funktionieren in der Weise, dass im eingeschalteten Zustand des Motors bei Unterschreiten einer Mindestdrehzahl ein Alarm erzeugt wird. Wird jedoch der Motor etwas oberhalb seiner Mindestdrehzahl betrieben, so kann nicht unterschieden werden, ob dies eine Folge einer niedrigen Betriebsspannung oder eine Folge einer sehr hohen Last ist. Ein **Blockierschutz** kann also in diesem Fall eine Überlastung des Motors nicht feststellen.

Steigt die Last an einem Motor, so steigt auch der Zuleitungsstrom des Motors. Infolge dessen muss der Zeitpunkt $t_2$ nach "früh" verlegt werden, also in Fig. 3 nach links, um ein Abklingen des Kreisstromes i* bis zum Ende des Kommutierungsvorgangs zu ermöglichen. Der $\mu$C 36 kann die Zeit $T_i$ erfassen, während deren zwischen den Zeitpunkten $t_2$ und $t_3$ ein Kreisstrom i* fließt, und diese Zeit wird umso länger, je höher die Last des Motors 20 ist. Deshalb kann diese Zeit $T_i = t_3 - t_2$ vom Mikrocontroller 36 erfasst und als Maß für die anliegende Last verwendet werden. Auf diese Weise kann ohne Mehraufwand ein Überlastschutz realisiert werden, indem man z. B. beim Überschreiten einer festgelegten Zeitdauer $T_i$ den Motor 20 abschaltet.

## Sensorlose Kommutierung

Fig. 13 zeigt einen sensorlosen Motor 20'. Dann, wenn in der Statorwicklung 26 eine vom Rotor 28 induzierte Spannung $u_{ind}$ vorhanden ist, die elektrisch erfasst werden kann, kann der Motor 20' "sensorlos" kommutiert werden

"Sensorlos" bedeutet, dass auf den Hallsensor 30 verzichtet werden kann, was sich positiv auf Kosten und Anwendbarkeit des Motors 20' bei "harten" Umgebungsbedingungen auswirkt, z.B. an einer heißen Maschine, oder in der Nähe eines Hochofens. Hallsensoren besitzen nämlich bei hohen Temperaturen und steigendem Abstand zum Sensormagneten zunehmend schlechtere Eigenschaften, welche auf diese Weise umgangen werden können. Auch wird hierdurch der Wirkungsgrad des Motors verbessert.

Bei der sensorlosen Kommutierung wird der Abschaltzeitpunkt des Stromes, der durch die obere Brückenhälfte 38 fließt, vom $\mu$C 36 geregelt. Dieser Zeitpunkt muss im Voraus so errechnet und ggf. geregelt werden, dass die im Wicklungsstrang 26 gespeicherte magnetische Energie in mechanische Energie umgewandelt worden ist, bevor kommutiert wird. Der exakte Zeitpunkt der Kommutierung kann durch die induzierte Spannung $u_{ind}$ festgestellt werden, welche der Rotor 28 bei stromfreier Wicklung 26 in dieser induziert. - Bei der Drehung des Rotors 28 wechselt ständig die Polarität der induzierten Spannung. Dieser Wechsel, also der Nulldurchgang der induzierten Spannung, kann vom $\mu$C 36 erfasst und als Signal für die Kommutierung verwendet werden.

Es ist wichtig, dass der Wicklungsstrang 26 bei der Kommutierung stromlos ist, da man sonst die induzierte Spannung nicht erfassen kann, und da in diesem Fall ein Signal HALL fehlt, so dass der Mikrocontroller 36 sozusagen die Orientierung verliert.

Letzteres muss durch eine Sicherheitsfunktion vermieden werden. Diese prüft, ob die induzierte Spannung bei der aktuellen Drehzahl (zuzüglich einer Sicherheitsreserve) erfasst werden kann. Ist das nicht der Fall, so wird kommutiert, obwohl die induzierte Spannung nicht erfasst werden kann, und der Wicklungsstrang 26 erhält beim folgenden Kommutierungsvorgang nur einen kurzen Stromimpuls, so dass die induzierte Spannung nun wieder mit großer Sicherheit erfasst und ausgewertet werden kann und der µC 36 erneut die Lage des Rotors 26 sicher feststellen kann. Das wird nachfolgend an einem Beispiel erläutert.

**Fig. 14** zeigt eine Darstellung ähnlich Fig. 3b), aber für den sensorlosen Motor 20' nach Fig. 13. Es werden dieselben Bezugszeichen verwendet wie in Fig. 3.

Wenn in Fig. 13 ein Strom $i_1$ durch den MOSFET T1 fließt, erhält man in Fig. 14 zwischen den Zeitpunkten $t_0$ und $t_2$ ein erhöhtes Potential $p_{52}$ am Drain D des MOSFET T1. Dabei gilt

$$T_{ON} = t_2 - t_0 \qquad \dots (3)$$

Im Falle eines sensorlosen Motors braucht man Daten für den Zeitpunkt $t_0$ für die Einschaltung des MOSFET T1, und ebenso die Zeitdauer $T_{ON}$, welche die Zeitdauer angibt, während deren ein Strom $i_1$ aus dem Gleichspannungsnetz $U_B$ über den MOSFET T1 zum Wicklungsstrang 26 und durch diesen fließen soll.

Zum Zeitpunkt $t_2$ wird der MOSFET T1 gesperrt, so dass dem Motor 20 keine Energie mehr aus dem Gleichspannungsnetz $U_B$ zugeführt werden kann, und stattdessen ein Kreisstrom i* fließt, wie das in Fig. 7 und Fig. 14 dargestellt ist. Dieser Kreisstrom i* nimmt während eines Zeitraums $T_i$ ab und erreicht zum Zeitpunkt $t_3$ den Wert 0. Die Zeitspanne $T_i$, während deren der Kreisstrom i* fließt, kann gemessen werden, da ihr Beginn $t_2$ bekannt ist und da an ihrem Ende $t_3$ am Drain D des MOSFET T1, also am Knotenpunkt 52, eine induzierte Spannung 18 ($u_{ind}$) auftritt. Diese wird durch die Spannung verursacht, die der rotierende Rotor 28 im Wicklungsstrang 26 induziert, und diese tritt nur dann auf, wenn der Kreisstrom i* auf Null abgeklungen ist.

Der Spannungsimpuls 18 wird durch den rotierenden Rotormagneten 28 (Fig. 13) im Wicklungsstrang 26 induziert, nimmt folglich nach dem Zeitpunkt $t_3$ ab, und geht zum Zeitpunkt $t_4$ (Fig. 14) durch Null. Er wird in Fig. 13 über die Signalleitung 72 und die Diode 96 dem µC 36 zugeführt, und die Existenz des Impulses 18 zeigt dem µC 36 an, dass der Wicklungsstrang 26 jetzt stromlos geworden ist. Während des Zeitraums

$$T_p = t_4 - t_3 \qquad \dots (4)$$

fließt kein Strom im Wicklungsstrang 26, und dieser Zeitraum kann ebenfalls gemessen werden, da sein Anfang und sein Ende gemessen werden können. Wie in Fig. 3 gilt

$$T_v = T_i + T_p \qquad \dots (5)$$

Am Zeitpunkt $t_4$, also dort, wo die induzierte Spannung $u_{ind}$ ihre Polarität ändert, kann stromlos kommutiert werden, und deshalb wird bevorzugt an dieser Stelle kommutiert, die mit C1 bezeichnet ist.

Bei einer sensorlosen Kommutierung wird als Sicherheitsmerkmal auch eine Zeitspanne berechnet, nach deren Ablauf auf jeden Fall kommutiert wird, und diese Zeitspanne wird hier als "TIMEOUT" bezeichnet. Diese Zeitspanne TIMEOUT wird in Fig. 14 gemessen ab dem Zeitpunkt $t_2$, und ihr Ende $t_{out}$ sollte immer zeitlich nach dem Zeitpunkt $t_4$ liegen, so dass bei einem normalen Lauf des Motors diese Funktion gar nicht wirksam wird, weil bereits vor ihrem Ablauf kommutiert wurde. Voraussetzung hierfür ist, dass

$$TIMEOUT > T_v \qquad \dots (6)$$

ist.

Nun kann es aus verschiedenen Gründen so sein, dass die Werte für $T_{ON}$ und/oder für ($T_i + T_p$) prognostisch

so berechnet werden, dass der Motor noch nicht optimal läuft. Dieser Zustand muss dann korrigiert werden, und dazu dient die Optimierungsroutine, die in **Fig. 15** dargestellt ist. Durch diese Routine wird die Dauer der Zeitspanne TC (Fig. 14) zwischen zwei aufeinander folgenden Kommutierungszeitpunkten, z. B. in Fig. 14 zwischen den Zeitpunkten $t_0$ und $t_4$, optimiert. Auch diese Routine setzt voraus, dass der Motor 20' (Fig. 13) rotiert.

Im Schritt S150 beginnt die Routine der **Fig. 15**. Im Schritt S152 wird zu einem Zeitpunkt $t_0$ der Strom $i_1$ (Fig. 13) eingeschaltet, also $i_1$ = "1". Wie Fig. 13 zeigt, fließt der Strom $i_1$ vom Anschluss 46 durch den MOSFET T1, die Statorwicklung 26 (von links nach rechts) und durch den MOSFET T4 nach Masse 50 und treibt den Rotor 28 an.

Während der Strom $i_1$ durch die Wicklung 26 fließt (und ebenso, wenn anschließend der Strom $i_1'$ (vgl. Fig. 9 und 10) in umgekehrter Richtung von rechts nach links durch die Wicklung 26 fließt), wird in S112 die Unterroutine S112 von Fig. 4 ausgeführt, d.h. die Zeitdauer $T_p$ wird auf einen Wert $T_{pmin}$ optimiert, bei dem die Leistung des Motors 20 nahe beim Optimum liegt. Dies sind in Fig. 4 die Schritte S112, 114, 116, 118 und 120, die bei Fig. 4 ausführlich beschrieben wurden. Wenn der Motor 20 läuft, wird der Wert $T_v$ für diese Unterroutine von der vorhergehenden Kommutierung übernommen.

Während der Strom $i_1$ (oder $i_1'$) fließt, finden fortlaufend Berechnungen statt. Im Schritt S154 wird ein Wert Tc verwendet, welcher der Zeit für eine Drehung des Rotors 28 um 180° el. entspricht. Dieser Wert gibt (indirekt) die Drehzahl des Motors 20 an und kann z.B. berechnet werden aus dem Abstand von zwei aufeinander folgenden Kommutierungszeitpunkten $C_n$ und $C_{(n-1)}$, also

$$T_C = C_n - C_{(n-1)} \qquad\qquad \dots (7)$$

Die Zeitdauer $T_{ON}$, innerhalb deren maximal im Bereich zwischen zwei Kommutierungszeitpunkten ein Strom fließen kann, ist gemäß Fig. 14

$$T_{ON} = T_C - T_v \qquad\qquad \dots (8)$$

Diese Zeitdauer $T_{ON}$ wird in S154 berechnet und gibt an, wann der gerade fließende Stromimpuls abgeschaltet werden muss. Da sich Tc aus der augenblicklichen Drehzahl ergibt, und da $T_v$ soeben in der Routine S112 optimiert wurde, ist $T_{ON}$ ein sehr aktueller Wert und ergibt einen ruhigen Lauf des Motors.

Ebenso wird in S154 die Zeitdauer TIMEOUT berechnet aus dem - soeben in S112 (Fig. 4) aktualisierten - Wert $T_v$ und einer Größe $T_{Offset}$, die einen Erfahrungswert darstellt und in Fig. 14 dargestellt ist.

In S156 ist die Zeitdauer $T_{ON}$ abgelaufen, also $T_{ON}$ = 0, was in Fig. 14 dem Zeitpunkt $t_2$ entspricht. Deshalb wird der Strom $i_1$ abgeschaltet, also $i_1$ = "0", und es fließt anschließend während der Zeit Ti der beschriebene Kreisstrom $i^*$. Wenn nämlich ein Motorstrom $i_1$ (oder $i_1'$) fließt, wird im Statorwicklungsstrang 26 magnetische Energie gespeichert, vgl. die Gleichung (1), und der Strom $i_1$ fließt zunächst weiter, und zwar als Kreisstrom $i^*$ im Uhrzeigersinn vom Knotenpunkt 52 durch den Strang 26 über den Knotenpunkt 54 und den MOSFET T4, ferner über die Verbindung 62 und die Diode 58 zurück zum Knotenpunkt 52. Der Kreisstrom $i^*$, der in diesem Fall fließt, treibt den Rotor 28 weiterhin an und nimmt dadurch rasch ab, d.h. die gespeicherte magnetische Energie wird rasch in kinetische Energie des Rotors 28 umgewandelt.

In S158 wird ständig geprüft, ob der Kreisstrom $i^*$ noch fließt. Dies kann man indirekt dadurch messen, dass in Fig. 13 am Eingang 98 des μC 36 die induzierte Spannung $u_{ind}$ messbar wird. Solange nämlich der Kreisstrom $i^*$ noch fließt, ist die induzierte Spannung $u_{ind}$ nicht messbar, d.h. der Zeitpunkt $t_3$ in Fig. 14 ist der Zeitpunkt, ab dem die induzierte Spannung $u_{ind}$ messbar wird, und die Zeitdauer $T_{ineu}$ ergibt sich folglich aus der Differenz $(t_3 - t_2)$, wird in S160 gespeichert und ersetzt den bisher gespeicherten Wert $T_{ialt}$, also $T_{ineu} := T_{ialt}$.

Wenn in S158 keine induzierte Spannung erfasst werden kann, kann der Grund auch darin liegen, dass ein TIMEOUT aufgetreten ist. Deshalb wird das in S162 geprüft. Dies wird dadurch erfasst, dass in Fig. 14 die Kommutierung erst an einem Zeitpunkt C' erfolgte, also zu einem Zeitpunkt $t_{out}$, der einen zeitlichen Abstand TIMEOUT vom Zeitpunkt $t_2$ hat. Das ist der zeitliche Abstand, der im Schritt S154 berechnet wurde.

Falls in 5162 die Antwort Nein lautet, geht die Routine zurück zum Schritt S158.

Falls in S162 die Antwort Ja lautet, ist seit dem Zeitpunkt $t_2$, an dem der Strom $i_1$ abgeschaltet wurde, eine Zeitspanne TIMEOUT abgelaufen, aber innerhalb dieser Zeitspanne konnte keine induzierte Spannung $u_{ind}$ gemessen werden, wie das in Fig. 14 schematisch für die Zeitspanne 164 dargestellt ist. In diesem Fall fließt der Kreisstrom $i^*$ noch, z.B., weil der Motor 20 durch einen Windstoß angetrieben wurde, so dass kein Zeitpunkt (analog dem Zeitpunkt t4 der Fig. 14) gemessen werden konnte, an dem der Kreisstrom auf Null gefallen ist.

In diesem Fall erfolgt eine Zwangs- oder Notkommutierung, und da die Zeit $T_{ON}$, die in S154 berechnet wurde, offensichtlich zu lang war, wird sie in S166 um einen Betrag a gekürzt. Anschließend geht die Routine zurück zum Schritt S150 und wird erneut durchlaufen.

Hierbei ergibt sich gemäß Fig. 14 bei 170 ein Signal p52, das kürzer ist als die vorhergehenden Signale p52 und p54, d.h. der Stromimpuls, der in Fig. 13 von 46 ($U_B$) in den Motor 20 fließt, ist wesentlich kürzer als die zeitlich vorhergehenden Stromimpulse, und durch die Optimierungsroutine S112 (Fig. 4 und 15) wird die Dauer der Stromimpulse dann allmählich wieder an das Optimum herangeführt.

Wenn die Kommutierung normal abläuft, wird in Fig. 15 im Schritt S168 geprüft, ob die induzierte Spannung $u_{ind}$ zu 0 geworden ist. Falls Nein, geht die Routine zurück zum Eingang von S168, und diese Prüfung wird so lange wiederholt, bis $u_{ind}$ zu 0 geworden ist. Im Schritt S170 wird dann kommutiert ("Com"), und die soeben gemessene Zeitdauer $T_p$ wird gespeichert. Auch in diesem Fall geht die Routine zurück zu S150.

Während der Zeit $T_{ON}$, in welcher der Strom $i_1$ fließt, berechnet der µC 36 im Schritt S154 die nächste Einschaltdauer $T_{ON}$ und die nächste Zeitdauer TIMEOUT, deren Funktion bereits erläutert wurde.

Wenn im Zeitpunkt $t_3$ der Kreisstrom i* den Wert Null erreicht hat, kann man am Drain 54 des MOSFET T2 die induzierte Spannung 18 messen, die durch den Rotormagneten 28 in der Statorwicklung 26 induziert wird. Diese Spannung ist in Fig. 14 als $u_{ind}$ 18 bezeichnet, und sie wird ab dem Zeitpunkt $t_3$ messbar und durchläuft zum Zeitpunkt $t_4$ den Wert Null.

In **Fig. 14** ist das schematisch dargestellt. Nach der Kommutierung C1 fließt der Strom $i_2$ während der Zeit $T_{ON2}$, und nach dem Abschalten (zum Zeitpunkt $t_2$') kann keine induzierte Spannung $u_{ind}$ gemessen werden, weil der Kreisstrom i* zu lange fließt. Deshalb erfolgt nach Ablauf der zuvor berechneten Zeit TIMEOUT zum Zeitpunkt C2 eine Zwangskommutierung, die aber nicht optimal ist und - übertrieben gesagt - eine Notkommutierung darstellt. Dies wird in S162 festgestellt, und die Einschaltzeit $T_{ON2}$ wird entsprechend um einen Betrag a (S166) verkürzt, so dass $T_{ON3}$ an einem Zeitpunkt $t_2$" endet, d. h. es fließt nur ein kurzer Strom aus dem Gleichspannungsnetz zum Motor 20', so dass der Strom zum Motor nur wenig ansteigen kann und folglich der anschließende Kreisstrom i* rasch abklingt. Wenn der Kreisstrom i* den Wert Null erreicht hat, kann die induzierte Spannung gemessen werden, und wenn diese zum Zeitpunkt C3 durch Null geht, wird wieder normal kommutiert.

Falls kein TIMEOUT vorliegt, geht die Routine der Fig. 15 zurück zum Schritt S158, wo weiter geprüft wird, ob die Bedingung vorliegt, dass

$$|u_{ind}| > 0 \qquad\qquad \ldots (9)$$

geworden ist.

Nach einem TIMEOUT ist also die Zeitspanne $T_{ON}$ sehr kurz, d. h. es fließt nur ein kurzer antreibender Stromimpuls, da die Zeit $T_{ON}$ aus Sicherheitsgründen um einen ziemlich großen Wert a reduziert werden muss, damit die nächste Kommutierung sicher durch den Nulldurchgang der induzierten Spannung 18 gesteuert werden kann.

Nach diesem kurzen antreibenden Stromimpuls kann sofort wieder die induzierte Spannung 18 (Fig. 14) erfasst und bei deren Nulldurchgang kommutiert werden, d. h. die Elektronik des sensorlosen Motors "weiß" nun wieder, wie die augenblickliche Stellung des Rotors 28 ist und kann die Kommutierung wieder mittels der Routine nach Fig. 4 optimieren, indem der Wert $T_p$ optimiert wird.

Dies ist deshalb möglich, weil im Anschluss an den Schritt S166 der Fig. 15 die Werte $T_{ON}$ und $T_v$ wieder exakt gemessen und gespeichert werden können, so dass auch der Wert $T_v = T_i + T_p$ bekannt ist und für die Berechnung der Kommutierung zur Verfügung steht.

Betrachtet man Fig. 14, so sieht man, dass dann, wenn bei unveränderter Drehzahl der Wert $T_{ON}$ stark verkürzt wird, anschließend die Zeit $T_i$, in welcher der Kreisstrom i* fließt, ebenfalls sehr kurz sein wird, weil durch den kurzen Stromimpuls im Motor nur wenig magnetische Energie gespeichert wurde. Bezogen auf Fig. 14 heißt das, dass sich die Zeitpunkte $t_2$ und $t_3$ in Richtung früh verschieben, also nach links. Dagegen bleibt der Wert $t_4$ weitgehend unverändert, da er gleich dem Nulldurchgang der induzierten Spannung 18 ist.

Durch die Funktion TIMEOUT wird es möglich, dass kurze Störungen, z. B. eine kurze Änderung der Betriebsspannung, sozusagen ausgebügelt werden, ohne dass hierdurch starke Änderungen in der Drehzahl des Motors 20 auftreten.

Naturgemäß sind im Rahmen der vorliegenden Erfindung vielfache Abwandlungen und Modifikationen möglich. Z. B. könnte in Fig. 14 die Zeit TIMEOUT auch berechnet werden ab dem Zeitpunkt $t_0$ bis zum Zeitpunkt $t_{out}$, wobei freilich die Version nach Fig. 14 bevorzugt wird. Die Varianten, wie sie in Fig. 2 dargestellt sind (Kondensator 48), oder in Fig. 1 (Strommessglied 64), oder in Fig. 9 (Z-Diode 90) können in gleicher Weise bei der sensorlosen Version verwendet werden.

EP 2 158 673 B1

**Patentansprüche**

1. Elektronisch kommutierter Motor zum Betrieb an einer Gleichspannungsquelle ($U_B$), welcher aufweist:

    Einen permanentmagnetischen Rotor (28) und einen Stator, welcher einen Statorwicklungsstrang (26) aufweist, in welchem im Betrieb durch den permanentmagnetischen Rotor (28) eine alternierende induzierte Spannung ($u_{ind}$) erzeugt wird;
    eine H-Brückenschaltung (22) mit Leistungs-Halbleitern (T1, T2, T3, T4), welche Brückenschaltung (22) eine obere Brückenhälfte (38) zum Anschluss an den einen Pol (46) der Gleichspannungsquelle ($U_B$) und eine untere Brückenhälfte (56) zum Anschluss an den anderen Pol (50) der Gleichspannungsquelle hat;
    welcher Statorwicklungsstrang (26) in der Diagonalen (24) der H-Brückenschaltung (22) angeordnet ist und im Betrieb alternierend von einem Stromimpuls ($i_1$) in einer ersten Richtung und dann von einem Stromimpuls ($i_1'$) in einer zur ersten Richtung entgegengesetzten Richtung durchflossen wird,
    wobei jeweils zwischen zwei aufeinander folgenden Stromimpulsen ein Kommutierungsvorgang liegt,
    und mit einer Anordnung (36) zur Ausführung folgender Schritte:

    Am Beginn eines Kommutierungsvorgangs wird der im Augenblick leitende Halbleiterschalter der einen Brückenhälfte (38) abgeschaltet, um eine Energiezufuhr aus der Gleichspannungsquelle ($U_B$) zu unterbrechen, so dass in der anderen Brückenhälfte (56) ein Kreisstrom ($i^*$; $-i^*$) durch den Statorwicklungsstrang (26), den dort leitend gesteuerten Halbleiterschalter, und eine dem gesperrten Halbleiterschalter dieser anderen Brückenhälfte zugeordnete Freilaufdiode (58; 60) fließt, welcher Kreisstrom ($i^*$; $-i^*$) die im magnetischen Kreis des Motors gespeicherte Energie mindestens teilweise in Antriebsenergie für den permanentmagnetischen Rotor (28) umwandelt; die im Statorwicklungsstrang (26) induzierte Spannung ($u_{ind}$) wird überwacht, um nach dem Ende des Kreisstroms ($i^*$) ein Signal hierfür zu erhalten, anschließend wird der bisher leitende Halbleiterschalter der anderen Brückenhälfte (56) gesperrt, und die Kommutierung wird abgeschlossen, indem dem Statorwicklungsstrang (26) aus der Gleichspannungsquelle ($U_B$) ein Strom in einer Richtung zugeführt wird, die zur Richtung des vor dem Kommutierungsvorgang fließenden Stromes entgegengesetzt ist.

2. Motor nach Anspruch 1, bei welchem mindestens einer der Halbleiterschalter als Feldeffekttransistor ausgebildet ist.

3. Motor nach Anspruch 2, bei welchem die H-Brücke (22) in einer Brückenhälfte (56) n-Kanal-MOSFETs (T3, T4) und in der anderen Brückenhälfte (38) p-Kanal-MOSFETs (T1, T2) aufweist.

4. Motor nach einem der vorhergehenden Ansprüche, 1 bei welchem zur Erfassung eines vorgegebenen niedrigen Wertes des Kreisstroms ($i^*$; $-i^*$) das Potenzial an wenigstens einem der Anschlüsse der Halbleiterschalter (T1, T2, T3, T4) der H-Brücke (22) überwacht wird.

5. Motor nach einem der vorhergehenden Ansprüche, bei welchem im Anschluss an das Fließen des Kreisstroms ($i^*$; $-i^*$) die Spannung ($u_{ind}$) überwacht wird, welche durch den rotierenden Rotor (28) in der stromlosen Statorwicklung (26) induziert wird,
und im Bereich eines vorgegebenen Wertes dieser induzierten Spannung ($u_{ind}$) kommutiert wird.

6. Motor nach Anspruch 5, bei welchem beim Nulldurchgang der induzierten Spannung ($u_{ind}$) kommutiert wird.

7. Motor nach einem der vorhergehenden Ansprüche, bei welchem dann, wenn die induzierte Spannung ($u_{ind}$) innerhalb eines vorgegebenen Drehstellungsbereichs nicht messbar ist, innerhalb einer vorgegebenen Zeitspanne (TIMEOUT) nach dem Ein- oder Ausschalten des Stromflusses vom Gleichstromnetz ($U_B$) zur Statorwicklung (26) eine Zwangskommutierung eingeleitet wird.

8. Motor nach einem der vorhergehenden Ansprüche, welchem ein $\mu C$ (36) zugeordnet ist, in welchem während der Zeitspanne ($T_{ON}$), während der der Statorwicklungsstrang (26) von einem Stromimpuls ($i_1$, $i_1'$) durchflossen wird, ein Zeitpunkt für die Abschaltung des betreffenden Stromimpulses ($i_1$, $i_1'$) berechnet wird.

9. Motor nach einem der vorhergehenden Ansprüche, welchem ein $\mu C$ (36) zugeordnet ist, in welchem während der Zeitspanne ($T_{ON}$), während deren der Statorwicklungsstrang (26) von einem Stromimpuls ($i_1$, $i_1'$) durchflossen wird, eine Zeitspanne (TIMEOUT) berechnet wird, nach deren Ablauf (Fig. 14: $t_{out}$) der Beginn eines Kommutierungsvorgangs eingeleitet wird, sofern nicht bereits vor Ablauf dieser Zeitspanne (TIMEOUT) eine Kommutierung durch den Nulldurchgang der im Statorwicklungsstrang (26) durch den Rotor (28) induzierten Spannung ($u_{ind}$) eingeleitet worden ist.

10. Motor nach einem der vorhergehenden Ansprüche, welchem ein $\mu$C (36) zugeordnet ist, in welchem während der Zeitspanne, während deren der Statorwicklungsstrang (26) von einem Stromimpuls ($i_1$, $i_1$') durchflossen wird, eine Zeitspanne ($T_p$) auf einen Wert ($T_{pmin}$) optimiert wird, bei welchem die zeitliche Distanz zwischen dem Zeitpunkt der Messbarkeit der induzierten Spannung ($u_{ind}$) und dem Zeitpunkt des Nulldurchgangs dieser Spannung in der Nähe eines Minimums gehalten wird.

11. Motor nach einem der vorhergehenden Ansprüche, welchem ein Zwischenkreiskondensator (48) zugeordnet ist.

12. Motor nach einem der vorhergehenden Ansprüche, welchem zur Steuerung mindestens eines Teils des Kommutierungsvorgangs ein Rotorstellungssensor (30) zugeordnet ist.

13. Motor nach Anspruch 12, bei welchem der Rotorstellungssensor (30) so angeordnet ist, dass sein Ausgangssignal (HALL) die Steuerung des Beginns des Stromes ($i_1$; $i_1$') in einzuschaltenden Halbleiterschaltern der H-Brücke (22) ermöglicht.

14. Motor nach Anspruch 12 oder 13, bei welchem der Rotorstellungssensor (30) entgegen der Drehrichtung aus der neutralen Zone des Motors (20) versetzt ist, um eine sogenannte Frühzündung zu bewirken.

15. Verfahren zum Betrieb eines elektronisch kommutierter Motors (20) an einer Gleichspannungsquelle ($U_B$), insbesondere einem Gleichstrom-Zwischenkreis, welcher Motor (20) aufweist:

Einen permanentmagnetischen Rotor (28) und einen mit diesem zusammen wirkenden Stator, welcher einen Statorwicklungsstrang (26) aufweist, in welchem im Betrieb durch den permanentmagnetischen Rotor (28) eine alternierende induzierte Spannung ($u_{ind}$) erzeugt wird;
eine H-Brückenschaltung (22) mit Leistungs-Halbleitern (S1, S2, S3, S4), welche Brückenschaltung (22) eine obere Brückenhälfte (38) hat, die im Betrieb mit dem einen Pol (46) der Gleichspannungsquelle ($U_B$) verbunden ist, und eine untere Brückenhälfte (56), welche im Betrieb mit dem anderen Pol (50) der Gleichspannungsquelle ($U_B$) verbunden ist, wobei der Statorwicklungsstrang (26) in der Diagonalen (24) der H-Brückenschaltung (22) angeordnet ist und im Betrieb alternierend von einem Stromimpuls ($i_1$) in einer ersten Richtung und dann von einem darauf folgenden Stromimpuls ($i_1$') in einer zur ersten Richtung entgegengesetzten Richtung durchflossen wird und jeweils zwischen zwei aufeinander folgenden Stromimpulsen ein Kommutierungsvorgang liegt, mit folgenden Schritten:

Am Beginn eines Kommutierungsvorgangs wird der im Augenblick leitende Halbleiterschalter der einen Brückenhälfte (38) gesperrt, um eine Energiezufuhr von der Gleichspannungsquelle ($U_8$) zum Motor (20) zu unterbrechen, so dass in der anderen Brückenhälfte (56) ein Kreisstrom ($i^*$) durch den Statorwicklungsstrang (26), den dort leitend gesteuerten Halbleiterschalter, und eine dem gesperrten Halbleiterschalter dieser anderen Brückenhälfte zugeordnete Freilaufdiode fließt, welcher Kreisstrom ($i^*$) die im magnetischen Kreis des Motors (20) gespeicherte Energie mindestens teilweise in Antriebsenergie für den permanentmagnetischen Rotor (28) umwandelt; die im Statorwicklungsstrang (26) induzierte Spannung ($u_{ind}$) wird überwacht,
um nach dem Ende des Kreisstroms ($i^*$) ein Signal hierfür zu erhalten; anschließend wird der bisher leitende Halbleiterschalter der anderen Brückenhälfte gesperrt, und die Kommutierung wird abgeschlossen, indem dem Statorwicklungsstrang (26) aus der Gleichspannungsquelle ($U_B$) ein Strom $i_1$' in einer Richtung zugeführt wird, die zur Richtung des vor dem Kommutierungsvorgang fließenden Stromes ($i_1$) entgegengesetzt ist.

## Claims

1. Electronically commutated motor for operation on a direct voltage source (UB), comprising:

a permanently magnetic rotor (28) and a stator, which comprises a stator winding phase (26), in which, in operation, an alternating induced voltage ($u_{ind}$) is generated by the permanently magnetic rotor (28);
an H-bridge circuit (22) with power semiconductors (T1, T2, T3, T4),

said bridge circuit (22) having an upper bridge half (38) for connection to one pole (46) of the direct voltage source (UB),
and a lower bridge half (56) for connection to the other pole (50) of the direct voltage source;
said stator winding phase (26) being arranged in the diagonal (24) of the H-bridge circuit (22), and in operation alternately, a current pulse (i1) flowing through it in a first direction, and then a current pulse (i1') flowing through it in a direction opposite to the first direction,
a commutation event occurring between each two successive current pulses,
and comprising an arrangement (36) to carry out the following steps:

at the start of a commutation event, the momentarily conducting semiconductor switch of one bridge half (38) is switched off, to interrupt an energy feed from the direct voltage source (UB), so that in the other bridge half (56) a circulating current (i*; -i*) flows through the stator winding phase (26), the semiconductor switch which is controlled to be conducting there, and a free-wheeling diode (58; 60) which is associated with the blocked semiconductor switch of this other bridge half, said circulating current (i*; -i*) converting the energy stored in the magnetic circuit of the motor at least partly into driving energy for the permanently magnetic rotor (28);
the voltage ($U_{ind}$) induced in the stator winding phase (26) is monitored, in order, after the end of the circulating current (i*), to obtain a signal for this,
then the semiconductor switch, which has been conducting until this time, of the other bridge half (56) is blocked, and the commutation is concluded, a current being fed to the stator winding phase (26) from the direct voltage source (UB) in a direction which is opposite to the direction of the current which flowed before the commutation event.

2. Motor according to Claim 1, wherein at least one of the semiconductor switches is in the form of a field effect transistor.

3. Motor according to Claim 2, wherein the H-bridge (22) in one bridge half (56) has n-channel MOSFETs (T3, T4), and in the other bridge half (38) has p-channel MOSFETs (T1, T2).

4. Motor according to any one of the preceding claims, wherein to capture a preset low value of the circulating current (i*; -i*), the potential at at least one of the terminals of the semiconductor switches (T1, T2, T3, T4) of the H-bridge is monitored.

5. Motor according to any one of the preceding claims, wherein following the flowing of the circulating current (i*; -i*), the voltage ($u_{ind}$) which is induced by the rotating rotor (28) in the de-energised stator winding (26) is monitored, and in the range of a preset value of this induced voltage ($u_{ind}$), commutation is made to occur.

6. Motor according to Claim 5, wherein commutation is made to occur place at the zero crossing of the induced voltage ($u_{ind}$).

7. Motor according to any one of the preceding claims, wherein if the induced voltage ($u_{ind}$) is not measurable within a preset rotary position range, within a preset time span (TIMEOUT) after the current flow from the direct current network (UB) to the stator winding (26) is switched on or off, forced commutation is initiated.

8. Motor according to any one of the preceding claims, with which a µC (36) is associated, and in said µC (36), during the time span (TON) during which a current pulse (i1, i1') flows through the stator winding phase (26), an instant for the relevant current pulse (i1, i1') to be switched off is calculated.

9. Motor according to any one of the preceding claims, with which a µC (36) is associated, and in said µC (36), during the time span (TON) during which a current pulse (i1, i1') flows through the stator winding phase (26), a time span (TIMEOUT) is calculated, and after it expires (Fig. 14; $t_{out}$) the start of a commutation event is initiated, unless before the expiry of this time span (TIMEOUT) commutation has been initiated by the zero crossing of the voltage ($u_{ind}$) which is induced in the stator winding phase (26) by the rotor (28).

10. Motor according to any one of the preceding claims, with which a µC (36) is associated, and in said µC (36), during the time span during which a current pulse (i1, i1') flows through the stator winding phase (26), a time span (Tp) is optimised to a value (Tpmin) at which the temporal distance between the instant of measurability of the induced voltage ($u_{ind}$) and the instant of the zero crossing of this voltage is kept near a minimum.

**11.** Motor according to any one of the preceding claims, with which a dc link capacitor (48) is associated.

**12.** Motor according to any one of the preceding claims, with which a rotor position sensor (30) is associated, to control at least part of the commutation event.

**13.** Motor according to Claim 12, wherein the rotor position sensor (30) is arranged so that its output signal (HALL) makes it possible to control the start of the current (i1; i1') in semiconductor switches, to be switched on, of the H-bridge (22).

**14.** Motor according to Claim 12 or 13, wherein the rotor position sensor (30) is displaced out of the neutral zone of the motor (20) against the direction of rotation, to cause so-called pre-ignition.

**15.** Method of operating an electronically commutated motor (20) on a direct voltage source (UB), in particular a direct current link circuit, said motor (20) comprising:

a permanently magnetic rotor (28) and a stator which it cooperates, and has a stator winding phase (26), in which, in operation, an alternating induced voltage ($u_{ind}$) is generated by the permanently magnetic rotor (28); an H-bridge circuit (22) with power semiconductors (S1, S2, S3, S4), said bridge circuit (22) having an upper bridge half (38) which in operation is connected to one pole (46) of the direct voltage source (UB), and a lower bridge half (56) which in operation is connected to the other pole (50) of the direct voltage source (UB), the stator winding phase (26) being arranged in the diagonal (24) of the H-bridge circuit (22), and in operation alternately, a current pulse (i1) flowing through it in a first direction, and then a subsequent current pulse (i1') flowing through it in a direction opposite to the first direction, and a commutation event occurring between each two successive current pulses, comprising the following steps:

at the start of a commutation event, the momentarily conducting semiconductor switch of one bridge half (38) is blocked, to interrupt an energy feed from the direct voltage source (UB) to the motor (20), so that in the other bridge half (56) a circulating current (i*) flows through the stator winding phase (26), the semiconductor switch which is controlled to be conducting there, and a free-wheeling diode which is associated with the blocked semiconductor switch of this other bridge half, said circulating current (i*) converting the energy stored in the magnetic circuit of the motor (20) at least partly into driving energy for the permanently magnetic rotor (28); the voltage ($U_{ind}$) induced in the stator winding phase (26) is monitored, in order, after the end of the circulating current (i*), to obtain a signal for this; then the semiconductor switch, which has been conducting until this time, of the other bridge half is blocked, and the commutation is concluded by feeding a current i1' to the stator winding phase (26) from the direct voltage source (UB) in a direction which is opposite to the direction of the current (i1) which flowed before the commutation event.

**Revendications**

**1.** Moteur à commutation électronique destiné à fonctionner sur une source de tension continue ($U_B$), lequel présente :

un rotor à aimant permanent (28) et un stator, lequel présente un enroulement de phase de stator (26) dans lequel, en fonctionnement, une tension induite alternative ($u_{ind}$) est générée par le rotor à aimant permanent (28) ; un circuit en pont en H (22) avec des semi-conducteurs de puissance (T1, T2, T3, T4), lequel circuit en pont (22) a un demi-pont supérieur (38) destiné à être raccordé à un pôle (46) de la source de tension continue ($U_B$) et un demi-pont inférieur (56) destiné à être raccordé à l'autre pôle (50) de la source de tension continue ; lequel enroulement de phase de stator (26) est disposé dans la diagonale (24) du circuit en pont en H (22) et, en fonctionnement, est parcouru alternativement par une impulsion de courant (i1) dans un premier sens et ensuite par une impulsion de courant (i1') dans un sens opposé au premier sens, un processus de commutation ayant chaque fois lieu entre deux impulsions de courant successives, et avec un dispositif (36) destiné à exécuter les étapes suivantes :

au début d'un processus de commutation, le commutateur à semi-conducteurs actuellement passant d'un demi-pont (38) est désactivé pour interrompre une arrivée d'énergie depuis la source de tension continue

($U_B$), de façon qu'il circule dans l'autre demi-pont (56) un courant de circuit (i* ; -i*) à travers l'enroulement de phase de stator (26), le commutateur à semi-conducteurs passant de l'autre demi-pont (36) et une diode de roue libre (58 ; 60) associée au commutateur à semi-conducteurs bloqué de cet autre demi-pont, lequel courant de circuit (i* ; -i*) convertit l'énergie stockée dans le circuit magnétique du moteur au moins partiellement en énergie d'entraînement pour le rotor à aimant permanent (28) ; la tension induite ($u_{ind}$) dans l'enroulement de phase de stator (26) est surveillée pour, après la fin du courant de circuit (i*), obtenir un signal correspondant,

le commutateur à semi-conducteurs jusqu'ici passant de l'autre demi-pont (56) est ensuite bloqué et la commutation est terminée en amenant à l'enroulement de phase de stator (26) depuis la source de tension continue ($U_B$) un courant dans un sens qui est opposé au sens du courant circulant avant le processus de commutation.

2. Moteur selon la revendication 1, dans lequel au moins un des commutateurs à semi-conducteurs est réalisé sous la forme d'un transistor à effet de champ.

3. Moteur selon la revendication 2, dans lequel le pont en H (22) présente dans un demi-pont (56) des MOSFET à canal N (T3, T4) et dans l'autre demi-pont (38) des MOSFET à canal P (T1, T2).

4. Moteur selon une des revendications précédentes, dans lequel, pour détecter une valeur faible prédéfinie du courant de circuit (i* ; -i*), le potentiel à au moins une des connexions des commutateurs à semi-conducteurs (T1, T2, T3, T4) du pont en H (22) est surveillé.

5. Moteur selon une des revendications précédentes, dans lequel, après la circulation du courant de circuit (i* ; -i*), la tension ($u_{ind}$) qui est induite par le rotor (28) en rotation dans l'enroulement de stator sans courant (26) est surveillée, et une commutation a lieu au voisinage d'une valeur prédéfinie de cette tension induite ($u_{ind}$).

6. Moteur selon la revendication 5, dans lequel la commutation a lieu au passage par zéro de la tension induite ($u_{ind}$).

7. Moteur selon une des revendications précédentes, dans lequel, lorsque la tension induite ($u_{ind}$) n'est pas mesurable à l'intérieur d'une plage de position de rotation prédéfinie, une commutation forcée est déclenchée à l'intérieur d'un intervalle de temps prédéfini (TIMEOUT) après l'activation ou la désactivation du flux de courant du réseau de courant continu ($U_B$) vers l'enroulement de stator (26).

8. Moteur selon une des revendications précédentes, auquel est associé un μC (36) dans lequel, pendant l'intervalle de temps ($T_{ON}$) au cours duquel l'enroulement de phase de stator (26) est parcouru par une impulsion de courant (i1, i1'), un instant pour la désactivation de l'impulsion de courant (i1, i1') concernée est calculé.

9. Moteur selon une des revendications précédentes, auquel est associé un μC (36) dans lequel, pendant l'intervalle de temps ($T_{ON}$) au cours duquel l'enroulement de phase de stator (26) est parcouru par une impulsion de courant (i1, i1'), un intervalle de temps (TIMEOUT) est calculé, à l'expiration duquel (fig. 14 : $t_{out}$) le début d'un processus de commutation est déclenché, si une commutation n'a pas déjà été déclenchée avant expiration de cet intervalle de temps (TIMEOUT) par le passage par zéro de la tension ($u_{ind}$) induite par le rotor (28) dans l'enroulement de phase de stator (26).

10. Moteur selon une des revendications précédentes, auquel est associé un μC (36) dans lequel, pendant l'intervalle de temps au cours duquel l'enroulement de phase de stator (26) est parcouru par une impulsion de courant (i1, i1'), un intervalle de temps ($T_p$) est optimisé à une valeur ($T_{pmin}$) pour laquelle la distance temporelle entre l'instant de mesurabilité de la tension induite ($u_{ind}$) et l'instant du passage par zéro de cette tension est maintenue au voisinage d'un minimum.

11. Moteur selon une des revendications précédentes, auquel un condensateur de circuit intermédiaire (48) est associé.

12. Moteur selon une des revendications précédentes, auquel est associé un capteur de position de rotor (30) pour la commande d'au moins une partie du processus de commutation.

13. Moteur selon la revendication 12, dans lequel le capteur de position de rotor (30) est disposé de façon que son signal de sortie (HALL) permette la commande du début du courant (i1 ; i1') dans des commutateurs à semi-conducteurs à activer du pont en H (22).

**14.** Moteur selon la revendication 12 ou 13, dans lequel le capteur de position de rotor (30) est décalé de la zone neutre du moteur (20) en sens inverse du sens de rotation pour produire ce que l'on appelle une avance à l'allumage.

**15.** Procédé pour faire fonctionner un moteur à commutation électronique (20) sur une source de tension continue ($U_B$), en particulier un circuit intermédiaire à tension continue, lequel moteur (20) présente :

un rotor à aimant permanent (28) et un stator coopérant avec celui-ci, lequel présente un enroulement de phase de stator (26) dans lequel, en fonctionnement, une tension induite alternative ($u_{ind}$) est générée par le rotor à aimant permanent (28) ; un circuit en pont en H (22) avec des semi-conducteurs de puissance (S1, S2, S3, S4), lequel circuit en pont (22) a un demi-pont supérieur (38) qui, en fonctionnement, est relié à un pôle (46) de la source de tension continue ($U_B$), et un demi-pont inférieur (56) qui, en fonctionnement, est relié à l'autre pôle (50) de la source de tension continue ($U_B$) ; lequel enroulement de phase de stator (26) est disposé dans la diagonale (24) du circuit en pont en H (22) et, en fonctionnement, est parcouru alternativement par une impulsion de courant (i1) dans un premier sens et ensuite par une impulsion de courant suivante (i1') dans un sens opposé au premier sens, un processus de commutation ayant chaque fois lieu entre deux impulsions de courant successives, comprenant les étapes suivantes :

au début d'un processus de commutation, le commutateur à semi-conducteurs actuellement passant d'un demi-pont (38) est bloqué pour interrompre une arrivée d'énergie depuis la source de tension continue ($U_B$), de façon qu'il circule dans l'autre demi-pont (56) un courant de circuit (i*) à travers l'enroulement de phase de stator (26), le commutateur à semi-conducteurs passant de l'autre demi-pont et une diode de roue libre associée au commutateur à semi-conducteurs bloqué de cet autre demi-pont, lequel courant de circuit (i*) convertit l'énergie stockée dans le circuit magnétique du moteur (20) au moins partiellement en énergie d'entraînement pour le rotor à aimant permanent (28) ; la tension induite ($u_{ind}$) dans l'enroulement de phase de stator (26) est surveillée pour, après la fin du courant de circuit (i*), obtenir un signal correspondant ; le commutateur à semi-conducteurs jusqu'ici passant de l'autre demi-pont est ensuite bloqué et la commutation est terminée en amenant à l'enroulement de phase de stator (26) depuis la source de tension continue ($U_B$) un courant i1' dans un sens qui est opposé au sens du courant (i1) circulant avant le processus de commutation.

*FIG. 1*

FIG. 2

*FIG. 3*

*FIG. 4*

*FIG. 5*

FIG. 6

*FIG. 7*

FIG. 8

EP 2 158 673 B1

*FIG. 9*

FIG. 10

*FIG. 11*

FIG. 12

FIG. 13

*FIG. 14*

S150

COMMUTATION
ROUTINE

S152 — i1 = "1"

S112 — OPTIMIZE $T_P$

S154 —
$T_{ON} = T_C - T_V$
TIMEOUT = $T_V + T_{OFFSET}$

S156 —
$T_{ON} = 0$ =>
i1 = "0" =>
i*

S158 — $|U_{ind}| > 0$ ? — N

Y

S160 — STORE $T_I$

S168 — $U_{ind} = 0$ ? — N

Y

S170 — COM; STORE $T_P$

S162 — TIMEOUT ? — N

Y

S166 — $T_{ON} := T_{ON} - a$

END

FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1346462 A
- DE 2346380 C2

**In der Beschreibung aufgeführte Nicht-Patentliteratur**

- *Antriebstechnik,* 1977, 27-30